# EUROPEAN PATENT APPLICATION

(11) **EP 1 388 857 A1**
(43) Date of publication of application: **11.02.2004**
(21) Application number: 03016633.4
(22) Date of filing: 30.07.2003
(51) Int. Cl.: G11B 20/00, G11B 27/30

(54) **Information generating apparatus and method, information reproducing apparatus and method, and information recording medium**

(30) Priority: 31.07.2002 JP 2002223829
(71) Applicant: Pioneer Corporation, Tokyo-to (JP)
(72) Inventor: Kuroda, Kazuo, Pioneer Corporation, Tsurugashima-shi, Saitama-ken (JP); Moriyama, Yoshiaki, Pioneer Cor. Tokorozawa Works, Saitama-ken (JP)
(74) Representative: Klingseisen, Franz, Dipl.-Ing.

(57) **Abstract**

An information generating apparatus is provided which can positively manage and control reproduction or the like on the main body for each country and so on after the illicit copy even when only the main body of recorded information is illicitly duplicated after a DVD is distributed, thereby positively preventing the illicit copy.

Region information is superimposed as a watermark WM in recording information. The region information controls permission of reproduction on the recording information, which is a target of at least one of reproduction and recording, for each predetermined region.

## Description

### BACKGROUND OF THE INVENTION

### 1. Field of the Invention

The present invention relates to the technical fields of information generating apparatus and method, an information reproducing apparatus and method, a recording medium, an information generating program, an information reproducing program, and an information recording medium. To be specific, the present invention relates to the technical fields of an information generating apparatus and method and an information generating program for generating information distributed or delivered via a recording medium such as an optical disc or a broadcast radio wave, an information reproducing apparatus and method and an information reproducing program for reproducing the distributed or delivered information, the recording medium used for distribution, an information recording medium for recording the information generating program or the information reproducing program.

### 2.Description of the Related Art

In recent years, DVDs (Digital Versatile Disc) which are several times larger in recording capacity than conventional CDs (Compact Disc) are widely used. An aspect of this is that DVDs (particularly read-only DVDs) produced in one country (ex. Japan) have been increasingly exported to other countries for sale.

For example, typical contents recorded on DVDs are movies. Such movies are generally protected by copyrights. Therefore, when DVDs are exported, it may also be necessary to impose restrictions on reproduction of movies in some exportation destinations.

Hence, according to standards that regulates recording of movies on DVDs, it is allowed to restrict the reproduction or prohibit the reproduction because of sales and advertisement strategies depending on countries where the DVDs are distributed.

Specifically, a player for reproducing the DVDs stores information indicating countries or regions where the player should be installed and operated (the information indicating countries or regions is referred to as "region information" on the standard). On the other hand, during manufacturing of DVDs, the DVDs store information indicating countries or regions where reproduction is permitted for movies or the like recorded on the DVDs (hereinafter, information indicating the countries and regions recorded on DVDs will be referred to as disc region information). The region information stored in the player, in which the DVD is loaded after distribution, and the disc region information recorded on the DVD are compared with each other when reproduction is started after the loading. The player is controlled so as to start reproducing the movie or the like only when coincidence is found.

On the conventional standard, the disc region information is recorded in a lead-in area on a DVD separately from the main part of the movie or the like to be reproduced.

Therefore, in the conventional case, when only the main part other than information in the lead-in area is illicitly duplicated, a reproduction restriction for each country or region cannot be performed on the duplicated information about the movie or the like. As a result, movies as copyrighted materials cannot be sufficiently protected from illicit copy or reproduction.

### SUMMARY OF THE INVENTION

Hence, the present invention has been devised in view of the above problem and has as an example of its objective the provision of an information generating apparatus, method, and program for generating information to be recorded on a distributed DVD so that even when only the main part is illicitly duplicated after distribution of the DVD having stored information such as a movie, reproduction of the main part can be positively managed and controlled for each country or region after the illicit copy, thereby positively preventing the illicit copy as necessary, and an information reproducing apparatus, method, and program for reproducing the recorded information, the DVD used for distribution, and an information recording medium for recording the information generating program or the information reproducing program.

The above object of the present invention can be achieved by an information generating apparatus. The information generating apparatus is provided with a control information adding device for adding permission control information to recording information, the permission control information controlling at least one of recording and reproduction of the recording information for each of predetermined regions.

According to the information generating apparatus of the present invention, since permission control information is added to recording information, even when illicit copy is performed only on recording information having the permission control information, it is possible to positively manage and control permission of recording or reproduction of recording information and impose a copy restriction for each of the regions after the illicit copy is performed.

In one aspect of the information generating apparatus of the present invention, the control information adding device further adds copy restriction information to the recording information, the copy restriction information restricting copy of the recording information for each of the regions after the recording information is recorded.

According to this aspect, since copy restriction information for each of the regions is also added on the recording information together with the permission control information, even when only the recording information is illicitly duplicated, it is possible to positively decide permission of recording or reproduction of the recording information and impose a copy restriction for each of the regions after the illicit copy is performed.

In another aspect of the information generating apparatus of the present invention, the permission control information and the copy restriction information include correlation information having a correlation for preventing tampering.

According to this aspect, since the permission control information and the copy restriction information include correlation information having a correlation for preventing tampering, even when the permission control information and the copy restriction information are illicitly tampered, it is possible to properly detect the tampering and to positively prevent illicit reproduction or recording of recording information thereafter.

In further aspect of the information generating apparatus of the present invention, the permission control information further includes period information indicating a period for permitting at least one of recording or reproduction of the recording information.

According to this aspect, since the permission control information further includes the period information, it is possible to manage and control permission for recording or reproduction while adding the lapse of time for each of the regions.

The above object of the present invention can be achieved by an information reproducing apparatus for reproducing the recording information outputted from the information generating apparatus that is provided with a control information adding device for adding permission control information and copy restriction information to recording information that is including unit copy restriction information for each unit of predetermined information, the permission control information controlling at least one of recording and reproduction of the recording information for each of predetermined regions, and the copy restriction information restricting copy of the recording information for each of the regions after the recording information is recorded. The information reproducing apparatus is provided with: a first extracting device for extracting the unit copy restriction information from the recording information, a second extracting device for extracting the copy restriction information from the recording information, a detecting device for detecting whether or not contents of the extracted unit copy restriction information and contents of the extracted copy restriction information coincide with each other, and a reproduction control device for prohibiting reproduction of the recording information when the contents of the extracted unit copy restriction information and the contents of the copy restriction information do not coincide with each other.

According to the information reproducing apparatus of the present invention, since the reproduction of the recording information is prohibited when the contents of the extracted unit copy restriction information and the contents of the copy restriction information do not coincide with each other, even when the region copy restriction information is illicitly tampered, it is possible to properly detect the tampering and to positively prevent illicit reproduction or recording of recording information thereafter.

The above object of the present invention can be achieved by an information reproducing apparatus for reproducing the recording information outputted from the information generating apparatus that is provided with a control information adding device for adding permission control information and copy restriction information to recording information, the permission control information controlling at least one of recording and reproduction of the recording information for each of predetermined regions, the copy restriction information restricting copy of the recording information for each of the regions after the recording information is recorded, and the permission control information and the copy restriction information include correlation information having a correlation for preventing tampering. The information reproducing apparatus is provided with: a first extracting device for extracting the permission control information from the recording information, a second extracting device for extracting the copy restriction information from the recording information, a detecting device for detecting presence or absence of tampering based on the correlation information included in the extracted permission control information and the extracted copy restriction information, and a reproduction control device for prohibiting reproduction of the recording information when tampering is detected by the detecting device.

According to the information reproducing apparatus of the present invention, since the reproduction of the recording information is prohibited when tampering is detected, even when the region copy restriction information is illicitly tampered, it is possible to properly detect the tampering and to positively prevent illicit reproduction or recording of recording information thereafter.

The above object of the present invention can be achieved by an information generating method. The information generating method is provided with a control information adding process of adding permission control information to recording information, the permission control information controlling at least one of recording or reproduction of the recording information for each of predetermined regions.

According to the information generating method of the present invention, since permission control information is added to recording information, even when illicit copy is performed only on recording information having the permission control information, it is possible to positively manage and control permission of recording or reproduction of recording information and impose a copy restriction for each of the regions after the illicit copy is performed.

The above object of the present invention can be achieved by an information reproducing method for reproducing the recording information, which includes unit copy restriction information for each unit of predetermined information, outputted with addition of permission control information and copy restriction information, the permission control information controlling at least one of recording and reproduction of the recording information for each of predetermined regions, and the copy restriction information restricting copy of the recording information for each of the regions after the recording information is recorded. The information reproducing method is provided with: a first extracting process of extracting the unit copy restriction information from the recording information, a second extracting process of extracting the copy restriction information from the recording information, a detecting process of detecting whether or not contents of the extracted unit copy restriction information and contents of the copy restriction information coincide with each other, and a reproduction control process of prohibiting reproduction of the recording information when the contents of the extracted unit copy restriction information and the contents of the extracted copy restriction information do not coincide with each other.

According to the information reproducing method of the present invention, since the reproduction of the recording information is prohibited when the contents of the extracted unit copy restriction information and the contents of the copy restriction information do not coincide with each other, even when the region copy restriction information is illicitly tampered, it is possible to properly detect the tampering and to positively prevent illicit reproduction or recording of recording information thereafter.

The above object of the present invention can be achieved by an information reproducing method for reproducing the recording information outputted with addition of permission control information and copy restriction information, the permission control information controlling at least one of recording and reproduction of the recording information for each of predetermined regions, the copy restriction information restricting copy of the recording information for each of the regions after the recording information is recorded, and the permission control information and the copy restriction information include correlation information having a correlation for preventing tampering. The information reproducing method is provided with: first extracting process of extracting the permission control information from the recording information, second extracting process of extracting the copy restriction information from the recording information, a detecting process of detecting presence or absence of tampering based on the correlation information included in the extracted permission control information and the extracted copy restriction information, and a reproduction control process of prohibiting reproduction of the recording information when tampering is detected by the detecting process. According to the information reproducing method of the present invention, since the reproduction of the recording information is prohibited when tampering is detected, even when the region copy restriction information is illicitly tampered, it is possible to properly detect the tampering and to positively prevent illicit reproduction or recording of recording information thereafter.

The above object of the present invention can be achieved by a computer program. The computer program represent a sequence of instructions, which is executed by a generating computer included in the information generating apparatus, the instructions cause the computer to function as a control information adding device for adding permission control information to recording information, the permission control information controlling at least one of recording or reproduction of recording information for each of predetermined regions.

According to the computer program , the computer reads out the computer program and the computer functions in such a manner that the permission control information is added to recording information. Therefore, even when illicit copy is performed only on recording information having the permission control information, it is possible to positively manage and control permission of recording or reproduction of recording information and impose a copy restriction for each of the regions after the illicit copy is performed.

The above object of the present invention can be achieved by a computer program . The computer program represent a sequence of instructions, which is executed by a reproducing computer, the instructions cause the computer to function as: first extracting device for extracting unit copy restriction information from recording information, second extracting device for extracting copy restriction information from the recording information, a detecting device for detecting whether or not contents of the extracted unit copy restriction information and contents of the extracted copy restriction information coincide with each other, and a reproduction control device for prohibiting reproduction of the recording information when the contents of the extracted unit copy restriction information and the contents of the copy restriction information do not coincide with each other, the reproducing computer being included in an information reproducing apparatus for reproducing the recording information outputted with addition of the permission control information and the copy restriction information, the permission control information controlling, for each of predetermined regions, at least one of recording or reproduction of the recording information including unit copy restriction information for each unit of predetermined information constituting the recording information, the copy restriction information restricting copy of the recording information after the recording information is recorded.

According to the computer program , the computer reads out the computer program and the computer functions in such a manner that the reproduction of the recording information is prohibited when the contents of the extracted unit copy restriction information and the contents of the copy restriction information do not coincide with each other. Therefore, even when the region copy restriction information is illicitly tampered, it is possible to properly detect the tampering and to positively prevent illicit reproduction or recording of recording information thereafter.

The above object of the present invention can be achieved by a computer program . The computer program represent a sequence of instructions, which is executed by a reproducing computer, the instructions cause the computer to function as: first extracting device for extracting permission control information from recording information, second extracting device for extracting copy restriction information from the recording information, a detecting device for detecting presence or absence of tampering based on correlation information included in the extracted permission control information and the extracted copy restriction information, and a reproduction control device for prohibiting reproduction of the recording information when tampering is detected by the detecting device, the reproducing computer being included in an information reproducing apparatus for reproducing the recording information outputted with addition of the permission control information and the copy restriction information, the permission control information controlling at least one of recording and reproduction of the recording information for each of predetermined regions and including correlation information having a correlation for preventing tampering, the copy restriction information including the correlation information and restricting copy of the recording information after the recording information is recorded.

According to the computer program , the computer reads out the computer program and the computer functions in such a manner that the reproduction of the recording information is prohibited when tampering is detected, even when the region copy restriction information is illicitly tampered, it is possible to properly detect the tampering and to positively prevent illicit reproduction or recording of recording information thereafter.

The above object of the present invention can be achieved by an information recording medium. The information recording medium records a program for an information generating so as to be readable by a computer included in an information generating apparatus, wherein the program allows the computer to function as a control information adding device for adding permission control information to recording information, the permission control information controlling at least one of recording or reproduction of recording information for each of predetermined regions.

According to the information recording medium, the computer reads out the program from the information recording medium and it functions in such a manner that the permission control information is added to recording information. Therefore, even when illicit copy is performed only on recording information having the permission control information, it is possible to positively manage and control permission of recording or reproduction of recording information and impose a copy restriction for each of the regions after the illicit copy is performed.

The above object of the present invention can be achieved by an information recording medium. The information recording medium records a program for an information reproduction so as to be readable by a computer, wherein the program allows the computer to function as: first extracting device for extracting unit copy restriction information from recording information, second extracting device for extracting copy restriction information from the recording information, a detecting device for detecting whether or not contents of the extracted unit copy restriction information and contents of the extracted copy restriction information coincide with each other, and a reproduction control device for prohibiting reproduction of the recording information when the contents of the extracted unit copy restriction information and the contents of the copy restriction information do not coincide with each other, the reproducing computer being included in an information reproducing apparatus for reproducing the recording information outputted with addition of the permission control information and the copy restriction information, the permission control information controlling, for each of predetermined regions, at least one of recording or reproduction of the recording information including unit copy restriction information for each unit of predetermined information constituting the recording information, the copy restriction information restricting copy of the recording information after the recording information is recorded.

According to the information recording medium, the computer reads out the program from the information recording medium and it functions in such a manner that the reproduction of the recording information is prohibited when the contents of the extracted unit copy restriction information and the contents of the copy restriction information do not coincide with each other. Therefore, even when the region copy restriction information is illicitly tampered, it is possible to properly detect the tampering and to positively prevent illicit reproduction or recording of recording information thereafter.

The above object of the present invention can be achieved by an information recording medium for storing recording information and control information, the recording information serving as a target of at least one of recording and reproduction, the control information controlling one of the recording and reproduction using the recording information. The information recording medium is provided with: a recording information recording region for recording the recording information with addition of the permission control information for controlling one of the recording and reproduction for each of predetermined regions, and a control information recording region for recording the control information.

According to the information recording medium of the present invention, since permission control information is added to recording information, even when illicit copy is performed only on recording information having the permission control information, it is possible to positively manage and control permission of recording or reproduction of recording information and impose a copy restriction for each of the regions after the illicit copy is performed.

The above object of the present invention can be achieved by an information recording medium. The information recording medium records a program for an information reproduction is recorded so as to be readable by a computer, wherein the program allows the computer to function as: first extracting device for extracting permission control information from recording information, second extracting device for extracting copy restriction information from the recording information, a detecting device for detecting presence or absence of tampering based on correlation information included in the extracted permission control information and the extracted copy restriction information, and a reproduction control device for prohibiting reproduction of the recording information when tampering is detected by the detecting device, the reproducing computer being included in an information reproducing apparatus for reproducing the recording information outputted with addition of the permission control information and the copy restriction information, the permission control information controlling at least one of recording and reproduction of the recording information for each of predetermined regions and including correlation information having a correlation for preventing tampering, the copy restriction information including the correlation information and restricting copy of the recording information after the recording information is recorded.

According to the information recording medium, the computer reads out the program from the information recording medium and it functions in such a manner that the reproduction of the recording information is prohibited when tampering is detected. Therefore, even when the region copy restriction information is illicitly tampered, it is possible to properly detect the tampering and to positively prevent illicit reproduction or recording of recording information thereafter.

In one aspect of the information recording medium of the present invention, copy restriction information is further added to the recording information, the copy restriction information restricting copy for each of the regions after the recording information is recorded.

According to this aspect, since copy restriction information for each of the regions is also added on the recording information together with the permission control information, even when only the recording information is illicitly duplicated, it is possible to positively decide permission of recording or reproduction of the recording information and impose a copy restriction for each of the regions after the illicit copy is performed.

In another aspect of the information recording medium of the present invention, the permission control information and the copy restriction information include correlation information having a correlation for preventing tampering.

According to this aspect, since the permission control information and the copy restriction information include correlation information, it is possible to properly detect the tampering and to positively prevent illicit reproduction or recording of recording information thereafter.

In further aspect of the information recording medium of the present invention, the permission control information further includes period information for permitting at least one of recording and reproduction of the recording information.

According to this aspect, since the permission control information further includes the period information, it is possible to manage and control permission for recording or reproduction while adding the lapse of time for each of the regions.

### BRIEF DESCRIPTION OF THE DRAWINGS

FIG. 1 is a diagram showing a recording pattern of information in a DVD according to Embodiment 1;
FIG. 2 is a diagram (I) showing the specific contents of information recorded in the DVD according to Embodiment 1;
FIG. 2(A) is a diagram showing the specific contents of a first information table;
FIG. 2(B) is a diagram showing the specific contents of a second information table;
FIG. 3 is a diagram (II) showing the specific contents of information recorded in the DVD according to Embodiment 1;
FIG. 3(A) is a diagram showing the specific contents of copy restriction information;
FIG. 3(B) is a diagram showing the specific contents of reproducible region information;
FIG. 4 is a diagram (III) showing the specific contents of information recorded in the DVD according to Embodiment 1;
FIG. 4(A) is a diagram showing the specific contents of post-recording reproducible region information;
FIG. 4(B) is a diagram showing the specific contents of post-recording recordable region information;
FIG. 4(C) is a diagram showing the specific contents of post-recording time-shifting region information;
FIG. 5 is a block diagram showing a schematic configuration of an information reproducing apparatus according to Embodiment 1;
FIG. 6 is a flowchart showing reproducing operations in the information reproducing apparatus according to Embodiment 1;
FIG. 7 is a block diagram showing a schematic configuration of an information transmission system according to Embodiment 2;
FIG. 8 is a block diagram showing a schematic configuration of a video transmission apparatus according to Embodiment 2;
FIG. 9 is a diagram showing a pattern of recording information transmitted in the information transmission system according to Embodiment 2;
FIG. 10 is a diagram (I) showing the specific contents of recording information according to Embodiment 2;
FIG. 10(A) is a diagram (I) showing the specific contents;
FIG. 10(B) is a diagram (II) showing the specific contents;
FIG. 11 is a diagram (II) showing the specific contents of recording information according to Embodiment 2;
FIG. 11 (A) is a diagram (I) showing the specific contents of recordable region information;
FIG. 11(B) is a diagram (II) showing the specific contents of time-shifting region information;
FIG. 12 is a diagram (III) showing the specific contents of recording information according to Embodiment 2;
FIG. 12(A) is a diagram showing the specific contents of viewable period information;
FIG. 12(B) is a diagram showing the specific contents of recordable period information;
FIG. 12(C) is a diagram showing the specific contents of recording region information;
FIG. 13 is a block diagram showing a schematic configuration of a set top box according to Embodiment 2;
FIG. 14 is a flowchart showing a receiving operation according to Embodiment 2;
FIG. 15 is a block diagram showing a schematic configuration of a recorder according to Embodiment 2;
FIG. 16 is a flowchart showing a recording operation according to Embodiment 2;
FIG. 17 is a diagram showing the specific contents of recording information according to Embodiment 3;
FIG. 17(A) is a diagram (I) showing the specific contents of a sub information table; and
FIG. 17(B) is a diagram (II) showing the specific contents of a sub information table.

### DETAILED DESCRIPTION OF THE PREFERRED EMBODIMENTS

Preferred embodiments of the present invention will be described below in accordance with the accompanying drawings.

The following embodiments will describe the case where the present invention is applied to an information transmission system for distributing or delivering information after a reproduction restriction or a recording restriction for each country or region is imposed, the information being recorded on a DVD for distribution or being delivered via a broadcast radio wave or a network such as the Internet.

### (I) Embodiment 1

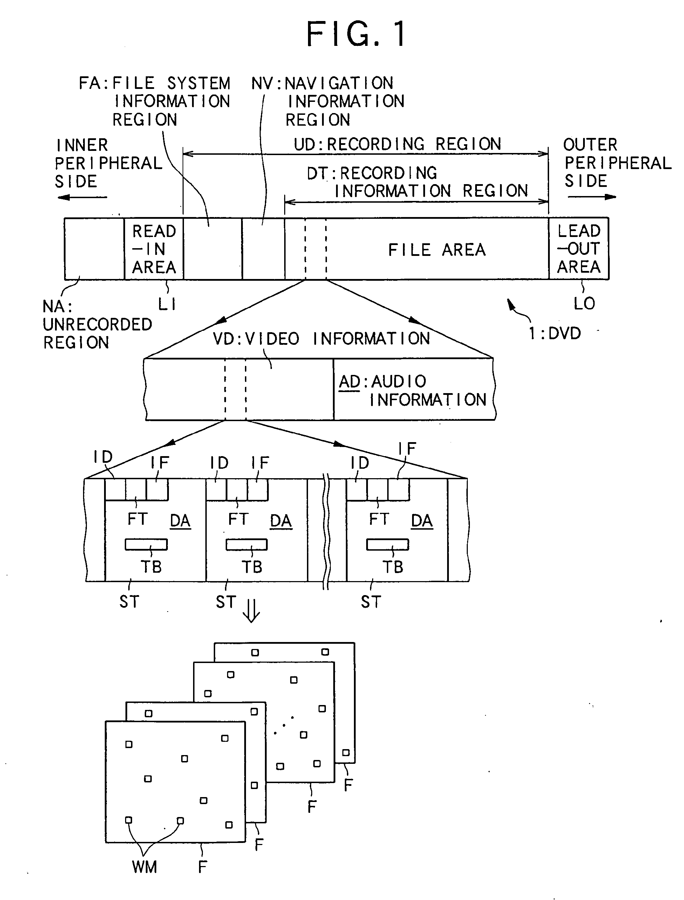

Referring to FIGs. 1 to 6, the following will firstly describe Embodiment 1, in which the present invention is applied to the case where the reproduction restriction is imposed when read-only DVDs having stored information are distributed.

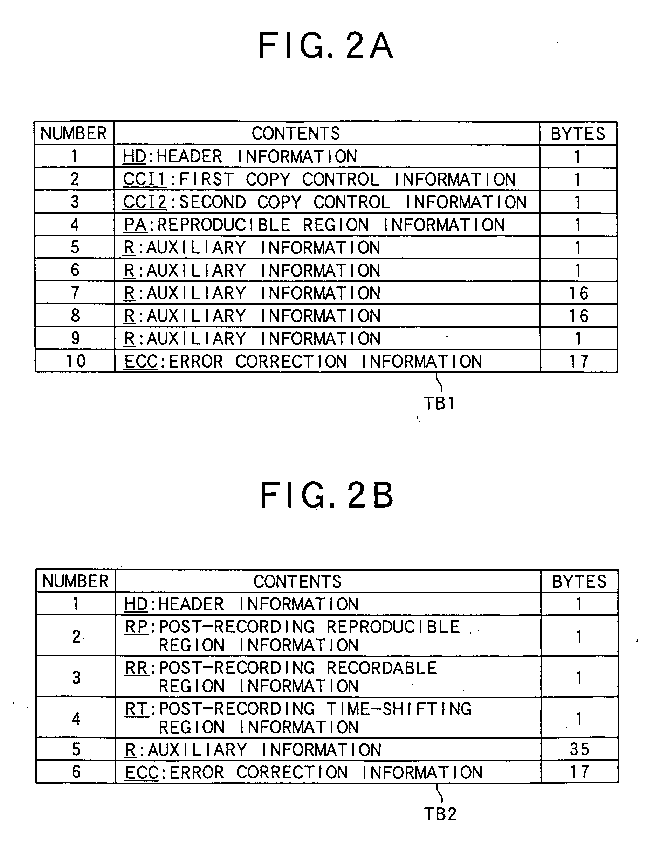

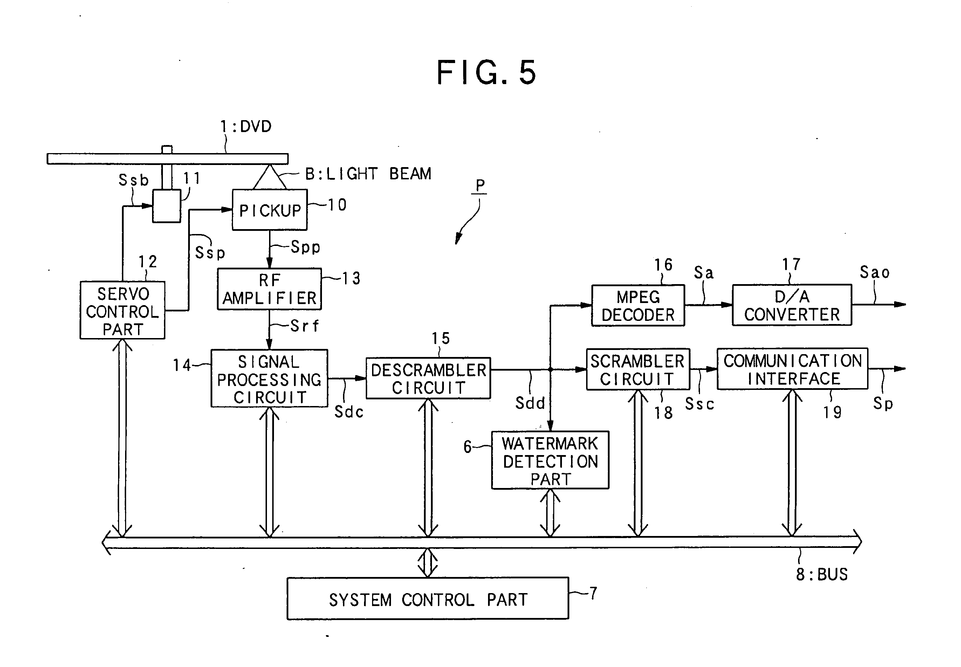

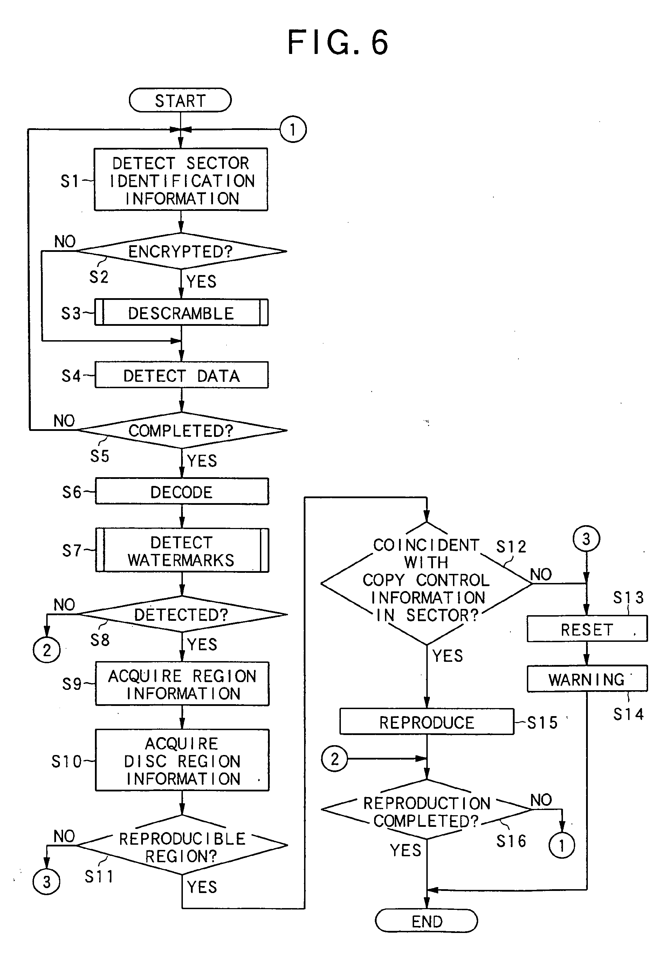

Besides, FIG. 1 is a diagram showing a recording pattern of information on a DVD according to Embodiment 1, FIGs. 2 to 4 are diagrams showing the specific contents of information recorded on the DVD, FIG. 5 is a block diagram showing a schematic configuration of an information reproducing apparatus (player) for reproducing information recorded on the DVD, and FIG. 6 is a flowchart showing a reproducing operation performed in the player.

Referring to FIGs. 1 to 3, the following will firstly describe the recording pattern of information recorded on the read-only DVD according to Embodiment 1.

As shown in FIG. 1, a read-only DVD 1 of Embodiment 1 is constituted of, from the inner periphery, an unrecorded region NA where no information is recorded, a lead-in region LI for recording control information to be firstly read at the reproduction of recording information recorded in a recording region UD, which will be described later, the recording region UD for recording the recording information to be actually reproduced, the recording information being encrypted as described later, and a lead-out area LO for recording completion information to be read at the completion of reproduction of the recording information.

Further, the recording region UD is constituted of, from the inner periphery, a file system information region FA for recording file system information indicating an information hierarchical structure in the recording information to be reproduced, a navigation information region NV for recording navigation information for controlling a reproduction pattern of the recording information (to be specific, the navigation information includes order information indicating a reproducing order of pieces of partial recording information constituting the recording information, and address information indicating a recording position of the partial recording information on the DVD 1), and a recording information region DT for recording the recording information to be reproduced.

The following will describe the recording pattern of the recording information according to Embodiment 1.

As shown in FIG. 1, the recording information includes one or more pieces of video information VD which is moving images composed of a plurality of static images, and one or more pieces of audio information AD including only voice information or sound information. The video information VD is constituted of a plurality of pieces of sector information ST.

At this point, one piece of the sector information ST is constituted of, from the head, an identification information ID including a sector information number for identifying, in the video information VD, the piece of the sector information ST in which the identification information ID is included, correction information FT including an error correction code for performing error correction when the identification information ID is detected, copy restriction information IF for restricting the number of copies when image information recorded in the sector information ST is duplicated after reproduction, and image information DA to be actually displayed in addition to the identification information ID and so on. As the copy control information IF, copy control information is stored which indicates that recording information recorded as the image information DA can be freely duplicated, copy and recording are permitted only one time, or the copy and recording are not permitted at all, for each of regions obtained by dividing the world into eight as will be described later.

Then, the image information DA in each piece of the sector information ST includes an information table TB corresponding to the read-only DVD 1 describing the disc region information and so on according to Embodiment 1.

Subsequently, the following will describe the static image included as the image information DA in each piece of the sector information ST. As shown in the lower part of FIG. 1, in frames F serving as the static images, the disc region information described as the information table TB is embedded as watermarks WM into eight places in bits (that is, eight bits in each of the frames F). At this point, the disc region information to be included in one of the information tables TB is embedded into the plurality of frames F. Then, when the image information DA is reproduced, the contents of the information table TB embedded as the watermarks WM are detected , so that a reproduction restriction and so on is imposed in accordance with the disc region information in the information table TB.

Referring to FIGs. 2 to 4, the following will describe the contents of the information table TB corresponding to the read-only DVD 1, the information table TB being included in each piece of the sector information ST.

Namely, as shown in FIG. 2, as the information table TB, a first information table TB1 (56 bytes in total) and a second information table TB2 (56 bytes in total) are included. In this case, each of the information tables TB has information of 56 bytes. As a result, each of the information tables TB is constituted of the watermarks WM which are included in the 112 (56 x 2) frames F in FIG. 1.

Then, as shown in FIG. 2(A), the first information table TB1 includes, from the first byte, header information HD (1 byte) indicating that the subsequent information is included in the first information table TB1, first copy control information CCI1 (1 byte) which is copy control information about four regions of the eight divided regions of the world, second copy control information CCI2 (1 byte) which is copy control information about the other four regions of the eight regions, reproducible region information PA (1 byte) which serves as disc region information indicating countries or regions where reproduction is permitted for recording information recorded in the DVD 1, auxiliary information R (35 bytes) including no significant information, and error correction information ECC (17 bytes) used for correcting an error when the first information table TB 1 is detected during reproduction of the image information DA.

On the other hand, as shown in FIG. 2(B), the second information table TB2 includes, from the first byte, header information HD (1 byte) indicating that the subsequent information is included in the second information table TB2, post-recording reproducible region information RP (1 byte) which serves as disc region information indicating regions where another reproduction is permitted after recording information reproduced from the DVD 1 is recorded on another recording medium such as an optical disc regarding the eight divided regions of the world, post-recording recordable region information RR (1 byte) which serves as disc region information indicating regions where copy and recording on still another recording medium are permitted after recording information reproduced from the DVD 1 is recorded on another recording medium such as an optical disc regarding the eight regions, post-recording time-shifting region information RT (1 byte) which serves as disc region information indicating regions where reproduction is permitted when a predetermined time elapses after recording information reproduced from the DVD 1 is recorded on another recording medium such as an optical disc ( time shift reproduction) regarding the eight regions, auxiliary information R (35 bytes) including no significant information, and error correction information ECC (17 bytes) used for correcting an error when the second information table TB2 is detected at the reproduction of the image information DA.

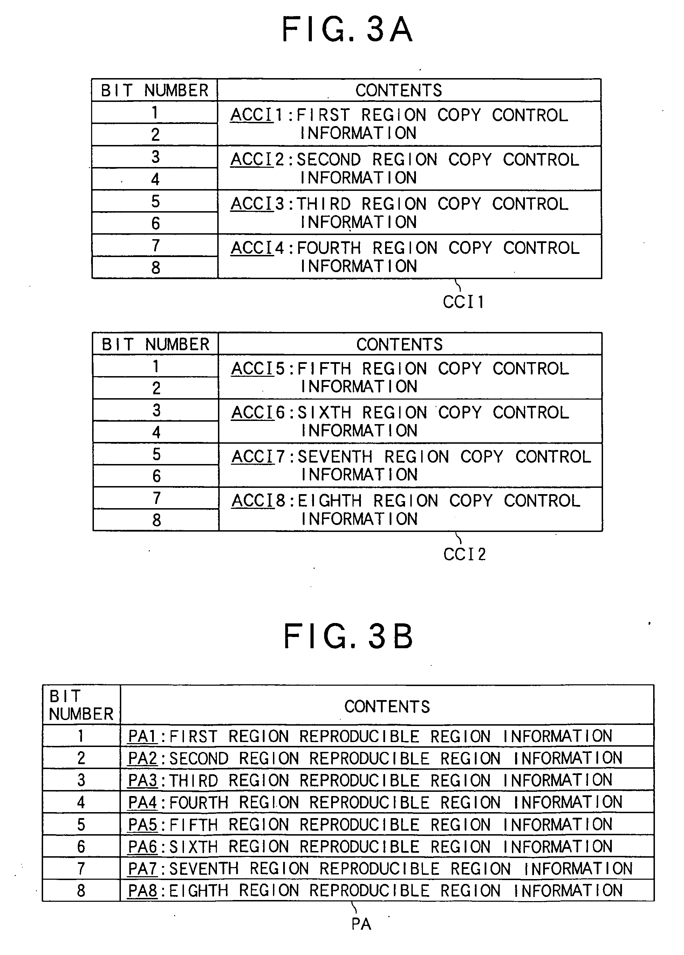

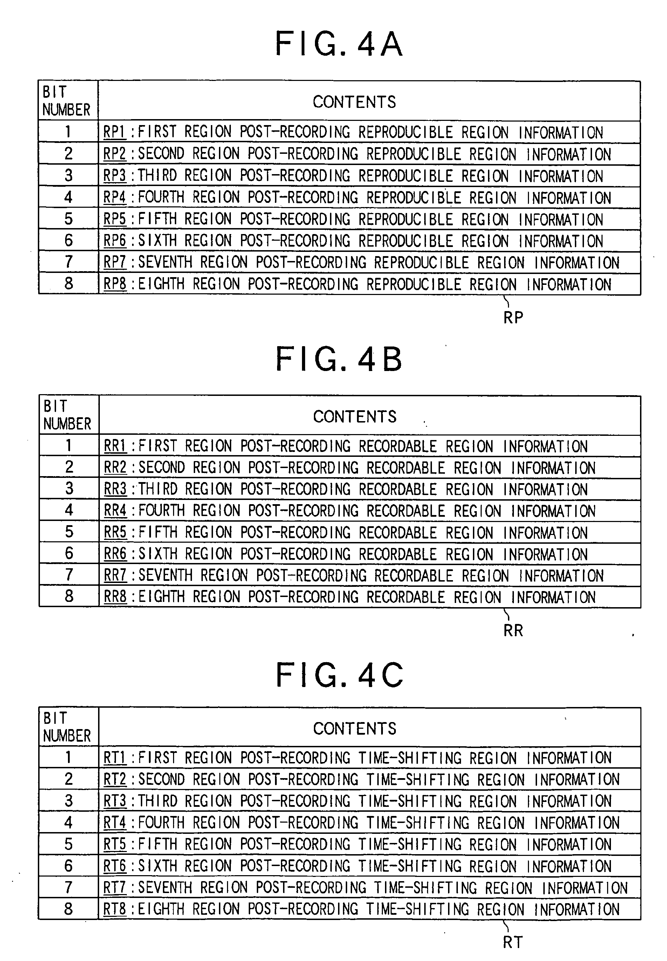

Referring to FIGs. 3 and 4, the detail of the first information table TB 1 will be described below.

First, as shown in FIG. 3(A), the first copy control information CCI1 included in the first information table TB1 is constituted of first region copy control information ACCI1 (2 bits) serving as copy control information used for a first region (e.g., North America), which is one of the eight regions, second region copy control information ACCI2 (2 bits) serving as copy control information used for a second region (e.g., Japan), which is another one of the eight regions, third region copy control information ACCI3 (2 bits) serving as copy control information used for a third region (e.g., Europe), which is still another one of the eight regions, and fourth region copy control information ACCI4 (2 bits) serving as copy control information used for a fourth region, which is one of the eight regions.

Further, as shown in FIG. 3(B), the second copy control information CCI2 included in the first information table TB 1 is constituted of fifth region copy control information ACCI5 (2 bits) serving as copy control information used for a fifth region, which is one of the eight regions, sixth region copy control information ACCI6 (2 bits) serving as copy control information used for a sixth region, which is another one of the eight regions, seventh region copy control information ACCI7 (2 bits) serving as copy control information used for a seventh region, which is still another one of the eight regions, and eighth region copy control information ACCI8 (2 bits) serving as copy control information used for an eighth region, which is one of the eight regions.

To be specific, the first region copy control information ACCI1 corresponding to the first region will be described as an example of the contents of the copy control information ACCI for the regions in FIG. 3. When a copy restriction is not imposed on recording information recorded on the DVD 1 in the first region (that is, copy and recording are permitted), the first region copy information ACCI1 is set at "00b ("b" indicates a binary number also in the following description)". When one-time copy and recording of the recording information are permitted in the first region, the first region copy control information ACCI1 is set at "10b". When copy and recording of the recording information are not permitted at all in the first region, the first region copy control information ACCI1 is set at "11b". Additionally, "01b" serving as a value of the first region copy control information ACCI1 is an auxiliary value which is not used in normal times.

Subsequently, for each of the eight regions, information of 1 bit is allocated to the reproducible region information PA included in the first information table TB1. The information indicates whether or not reproduction of recording information recorded in the DVD 1 is permitted in each of the eight regions. To be specific, as shown in FIG. 3(B), the reproducible region information PA is constituted of first region reproducible information PA1 corresponding to the first region, second region reproducible information PA2 corresponding to the second region, third region reproducible information PA3 corresponding to the third region, fourth region reproducible information PA4 corresponding to the fourth region, fifth region reproducible information PA5 corresponding to the fifth region, sixth region reproducible information PA6 corresponding to the sixth region, seventh region reproducible information PA7 corresponding to the seventh region, and eighth region reproducible information PA8 corresponding to the eighth region.

Further, as specific values of the reproducible information PA1 to PA8 for the respective regions, in the respective regions, when recording information recorded on the DVD 1 is assumed to be reproducible in a region, reproducible information corresponding to the region has a value of "1b". When the recording information is not assumed to be reproducible in the region, reproducible information corresponding to the region has a value of "0b"

Moreover, for each of the eight regions, information of 1 bit is allocated to the post-recording reproducible region information RP included in the second information table TB2. The information indicates whether or not reproduction of recording information recorded in the DVD 1 is permitted in each of the eight regions after the recording information is reproduced and recorded on another recording medium (to be specific, a recordable optical disc and so on). To be specific, as shown in FIG. 4(A), the post-recording reproducible region information RP is constituted of first region post-recording reproducible information RP1 corresponding to the first region, second region post-recording reproducible information RP2 corresponding to the second region, third region post-recording reproducible information RP3 corresponding to the third region, fourth region post-recording reproducible information RP4 corresponding to the fourth region, fifth region post-recording reproducible information RP5 corresponding to the fifth region, sixth region post-recording reproducible information RP6 corresponding to the sixth region, seventh region post-recording reproducible information RP7 corresponding to the seventh region, and eighth region post-recording reproducible information RP8 corresponding to the eighth region.

Further, as specific values of the post-recording reproducible information RP1 to RP8 for the respective regions, when reproduction of recording information recorded on the DVD 1 is permitted in a region after the recording information is reproduced and recorded on another recording medium, post-recording reproducible information corresponding to the region has a value of "1b". When reproduction is not permitted in the region after the recording information is reproduced and recorded on another recording medium, the post-recording reproducible information corresponding to the region has a value of "0b".

Moreover, for each of the eight regions, information of 1 bit is allocated to the post-recording recordable region information RR included in the second information table TB2. The information indicates for each of the eight regions whether or not recording information recorded on the DVD 1 is allowed to be duplicated and recorded on still another recording medium after the recording information is reproduced and recorded on another recording medium. To be specific, as shown in FIG. 4(B), the post-recording recordable region information RR is constituted of first region post-recording recordable information RR1 corresponding to the first region, second region post-recording recordable information RR2 corresponding to the second region, third region post-recording recordable information RR3 corresponding to the third region, fourth region post-recording recordable information RR4 corresponding to the fourth region, fifth region post-recording recordable information RR5 corresponding to the fifth region, sixth region post-recording recordable information RR6 corresponding to the sixth region, seventh region post-recording recordable information RR7 corresponding to the seventh region, and eighth region post-recording recordable information RR8 corresponding to the eighth region.

Additionally, as specific values of the post-recording recordable information RR1 to RR8 for the respective regions, when recording information recorded on the DVD 1 is allowed to be duplicated and recorded on still another recording medium after the recording information is reproduced and recorded on another recording medium, the post-recording recordable information RR corresponding to the region has a value of "1b". When copy and recording are not permitted in the region, the post-recording recordable information corresponding to the region has a value of "0b".

Finally, for each of the eight regions, information of 1 bit is allocated to the post-recording time-shifting region information RT included in the second information table TB2. The information · indicates whether or not time shift reproduction of recording information reproduced from the DVD 1 is permitted after the recording information is recorded on another recording medium. To be specific, as shown in FIG. 4(C), the post-recording time-shifting region information RT is constituted of first region post-recording time-shifting region information RT1 corresponding to the first region, second region post-recording time-shifting region information RT2 corresponding to the second region, third region post-recording time-shifting region information RT3 corresponding to the third region, fourth region post-recording time-shifting region information RT4 corresponding to the fourth region, fifth region post-recording time-shifting region information RT5 corresponding to the fifth region, sixth region post-recording time-shifting region information RT6 corresponding to the sixth region, seventh region post-recording time-shifting region information RT7 corresponding to the seventh region, and eighth region post-recording time-shifting region information RT8 corresponding to the eighth region.

Moreover, as specific values of the post-recording time-shifting region information RT1 to RT8 for the respective regions, when time shift reproduction is permitted in a region after recording information recorded on the DVD 1 is recorded on another recording medium, post-recording time-shifting region information RT corresponding to the region has a value of "1b". When time shift reproduction is not permitted in the region, the post-recording time-shifting region information RT corresponding to the region has a value of "0b"

Referring to FIGs. 5 and 6, the following will describe an embodiment of a DVD player which serves as an information reproducing apparatus for reproducing recording information from the DVD 1 which stores the recording information in the above pattern.

FIG. 5 is a block diagram showing the schematic configuration of the DVD player, and FIG. 6 is a flowchart showing reproduction in the DVD player.

As shown in FIG. 5, a DVD player P for reproducing and outputting recording information recorded on the read-only DVD 1 of Embodiment 1 is constituted of a pickup 10, a spindle motor 11, a servo control part 12, an RF (Radio Frequency) amplifier 13, a signal processing circuit 14, a descramble circuit 15, an MPEG (Moving Picture Expert Group) decoder 16, a D/A (Digital/Analog) converter 17, a scramble circuit 18, a communication interface 19, a watermark detection part 6, and a system control part 7 serving as detecting device, first extracting device, second extracting device, and reproduction control device. The servo control part 12, the signal processing circuit 14, the descramble circuit 15, the scramble circuit 18, the communication interface 19, the watermark detection part 6, and the system control part 7 are connected via a bus 8 so that control information and so on can be transferred to one another. Further, the system control part 7 stores region information indicating countries or regions where the DVD player P should be installed and operated.

The operations will be described below.

First, as described above, recording information to be reproduced is compressed according to a predetermined compression method (to be specific, MPEG and so on) and is recorded on the DVD 1. Further, the recording information is encrypted according to a predetermined encryption scheme and is recorded, and the first information table TB1 and the second information table TB2 are embedded as the watermarks WM in each of the frames F in the recording information.

Moreover, the DVD player P can output the recording information in a digital form from the DVD 1 to an external network via the communication interface 19 without decoding the recording information, and the DVD player P can reproduce and decode the recording information and directly output the recording information to a display or speakers (not shown) as analog information.

When recording information is reproduced from the DVD 1, in the DVD player P, the spindle motor 11 driven by a spindle control signal Ssb, which will be described later, firstly rotates the DVD 1 at a predetermined rotational speed.

Then, the pickup 10 irradiates the rotating DVD 1 with a light beam B of a constant intensity for reproduction, receives reflected light of the light beam B from the DVD 1 to generate a detection signal Spp corresponding to the stored recording information, and outputs the signal to the RF amplifier 13.

At this point, a displacement between the condensing position of the light beam B and the position of an information track for storing recording information to be reproduced on the DVD 1 is eliminated by causing a pickup servo signal Ssp outputted from the servo control part 12 to drive an actuator (not shown) which changes the position of an objective lens (not shown) for condensing the light beam B on the information track.

Then, the RF amplifier 13 amplifies the detection signal Spp and outputs the signal as an RF signal Srf to the signal processing circuit 14.

Subsequently, the signal processing circuit 14 performs waveform shaping or the like on the RF signal Srf under the control of the system control part 7 via the bus 8, generates a processing signal Sdc, and outputs the signal to the descramble circuit 15.

Then, under the control of the system control part 7 via the bus 8, the descramble circuit 15 descrambles the encryption which is performed on the recording information included in the processing signal Sdc, generates a descramble signal Sdd, and outputs the signal to the MPEG decoder 16, the scramble circuit 18, and the watermark detection part 6.

Thus, under the control of the system control part 7 via the bus 8, the watermark detection part 6 detects the first information table TB1 and the second information table TB2 that are included in the descramble signal Sdd, and outputs the contents to the system control part 7.

Then, the system control part 7 controls the components so as to impose a reproduction restriction on the recording information in the DVD 1 based on the outputted contents of the first information table TB1 and second information table TB2.

As a detailed specific configuration of the watermark detection part 6, for example, a watermark detection part configured as disclosed in paragraphs [0035] to [0053] and FIG. 3 of Japanese Patent Laid-Open publication No. 11-98341 is suitable.

On the other hand, the MPEG decoder 16 for receiving the descramble signal Sdd expands the recording information included in the descramble signal Sdd according to an expansion method corresponding to the compression method having been performed on the descramble signal Sdd, generates an expansion signal Sa, and outputs the signal to the D/A converter 17.

Then, the D/A converter 17 converts the expansion signal Sa into an analog signal, generates an analog output signal Sao, and outputs the signal to the display or speakers.

On the other hand, under the control of the system control part 7 via the bus 8, the scramble circuit 18 for receiving the descramble signal Sdd encrypts the descramble signal Sdd again according to encryption using an encryption key having been determined in the communication interface 19, generates an encryption signal Ssc, and outputs the signal to the communication interface 19. At this point, a decoding operation is not performed on the recording information included in the encryption signal Ssc, and the recording information is outputted to the communication interface 19 as it is.

Then, the communication interface 19 performs predetermined output interface processing on the encryption signal Ssc under the control of the system control part 7 via the bus 8, and outputs the signal as demodulation information Sp to an external network and so on.

In parallel with these operations of the components, the system control part 7 imposes the reproduction restriction and exercises control over the operations of the components.

Referring to the flowchart of FIG. 6, the following will describe information reproduction (including the reproduction restriction) from the DVD 1. The reproduction is performed in the DVD player P configured thus. The following explanation will describe processing performed when recording information recorded on the DVD 1 is outputted as the analog output signal Sao to the display and speakers.

As shown in FIG. 6, in the information reproduction of Embodiment 1, the light beam B for reproduction is firstly emitted to a recording position for storing recording information to be reproduced on the DVD 1, the sector information ST (FIG. 1) recorded on the recording position is read, and the identification information ID is detected from the information (step S1).

Subsequently, information in the sector information ST that is reproduced after the identification information ID is read to confirm whether the information is encrypted or not (step S2). Then, when the information is not encrypted (step S2; NO), an advance is made to step S4, which will be described later. On the other hand, when the information is encrypted (step S2; YES), the encryption is descrambled in the descramble circuit 15 (step S3) and the recording information is read while the descrambling operation is performed.

Subsequently, while the recording information is read, whether ' reading of necessary information is completed is monitored all the time (step S5). When reading is not completed (step S5; NO), a return is made to step S1 to reproduce recording information in the subsequent sector information ST. On the other hand, when reading of necessary recording information is completed (step S5; YES), the read recording information (descramble signal Sdd) is decoded in the MPEG decoder 16 so as to be outputted as the analog output signal Sao (step S6) and the watermarks WM are detected from information that is included in the descramble signal Sdd and corresponds to the sector information ST (step S7).

· Then, it is confirmed whether or not the watermarks WM are detected (step S8). When the watermarks WM are not detected (step S8; NO), it is decided that a reproduction restriction is not necessary on the recording information recorded on the DVD 1 which is currently loaded in the DVD player P, and an advance is made to step S16, which will be described later. On the other hand, when the watermarks WM are detected (step S8; YES), region information which is stored in the system control part 7 and corresponds to the DVD layer P is acquired (step S9), the contents of the first information table TB 1 and the second information table TB2 are extracted from the watermarks WM detected in step S8, and the reproducible region information PA is acquired as disc region information (step S10).

Subsequently, based on the acquired reproducible region information PA, it is confirmed whether or not the recording information recorded on the DVD 1 is reproducible in regions indicated by the region information acquired in step S9, that is, in countries and regions where the DVD player P should be installed ' and operated (step S11). Then, when it is decided that the installation region of the DVD player P is not a reproducible region of the recording information based on the reproducible region information PA (step S11; NO), the recording information cannot be reproduced by the DVD player P. Thus, the DVD player P is reset to forcefully terminate reproduction of the recording information recorded on the DVD 1 (step S13), a warning is issued on a display or the like (not shown) to indicate that the recording information cannot be reproduced (step S14), and thus a series of reproducing operations is completed.

On the other hand, in the decision of step S11, when it is decided that the installation region of the DVD player P is a reproducible region of the recording information based on the reproducible region information PA (step S11; YES), confirmation is performed on the detected contents of the copy restriction information IF in the sector information ST and the detected (steps S7 and S8) contents of the region copy control information ACCI in the first information table TB 1, and it is confirmed whether or not the contents of the copy restriction information IF corresponding to the region indicated by the region information coincide with the contents of the region copy control information ACCI corresponding to the region (step S12) (namely, whether illicit tampering is performed on either of the information IF or the information ACCI).

Then, when the contents of the copy restriction information IF corresponding to the region indicated by the region information coincide with the contents of the region copy control information ACCI corresponding to the region (step S12; YES), it is decided that illicit tampering is not performed on the DVD 1, reproduction is performed to output the decoded (step S6) recording information as the analog output signal SaO (step S15).

Subsequently, during reproduction, whether necessary recording information is completely reproduced is monitored all the time (step S16). When the reproduction is completed (step S16; YES), the reproduction is ended. On the other hand, when the reproduction is not completed (step S16; NO), a return is made to step S1 to continue the series of reproducing operations.

On the other hand, in the decision of step S12, when the contents of the copy restriction information IF corresponding to the region indicated by the region information do not coincide with the contents of the region copy control information ACCI corresponding to the region (step S12; NO), there is a probability that illicit tampering is performed on the DVD 1. Therefore, it is decided that recording information recorded on the currently loaded DVD 1 should not be reproduced, the DVD player P is reset to forcefully terminate reproduction in the DVD player P (step S13), a warning is issued on the display and so on to indicate that the recording information cannot be reproduced (step S14), and the series of reproducing operations is completed.

As described above, with the recording pattern of the DVD 1 and the operations of the DVD player P according to Embodiment 1, since disc region information such as the reproducible region information PA is superimposed on recording information, even when illicit copy is performed only on recording information having the superimposed disc region information, it is possible to positively manage and control permission of recording or reproduction of recording information and impose a copy restriction for each of the regions after the illicit copy is performed.

Therefore, it is possible to positively prevent the illicit copy as necessary.

Moreover, since copy restriction information for each of the regions is also superimposed on the recording information together with the disc region information, even when only the recording information is illicitly duplicated, it is possible to positively decide permission of recording or reproduction of the recording information and impose a copy restriction for each of the regions after the illicit copy is performed.

Further, when the detected contents of the copy restriction information IF in the sector information ST coincide with the detected contents of the region copy restriction information ACCI, recording information is reproduced. When the contents of the copy restriction information IF do not coincide with the detected contents of the region copy restriction information ACCI, the recording information is prohibited from being reproduced. Thus, even when the region copy restriction information ACCI is illicitly tampered, it is possible to properly detect the tampering and to positively prevent illicit reproduction or recording of recording information thereafter.

### (II) Embodiment 2

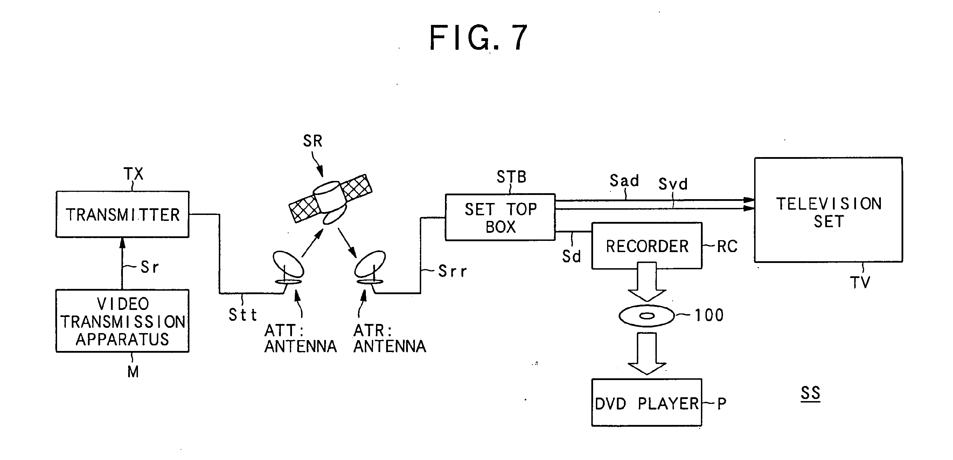

Referring to FIGs. 7 to 16, the following will describe Embodiment 2 that is another embodiment of the present invention.

Additionally, Embodiment 2 described below is an embodiment in which the present invention is applied to the case where a reproduction restriction or recording control is performed on recording information at a transmission destination in an information transmission system for transmitting the recording information ' including at least image information via radio waves of satellite broadcasting.

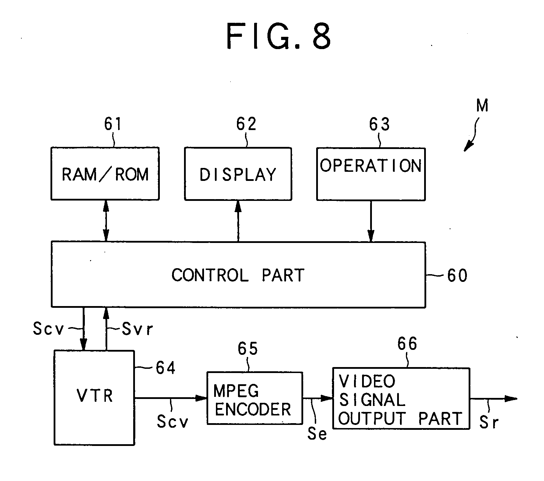

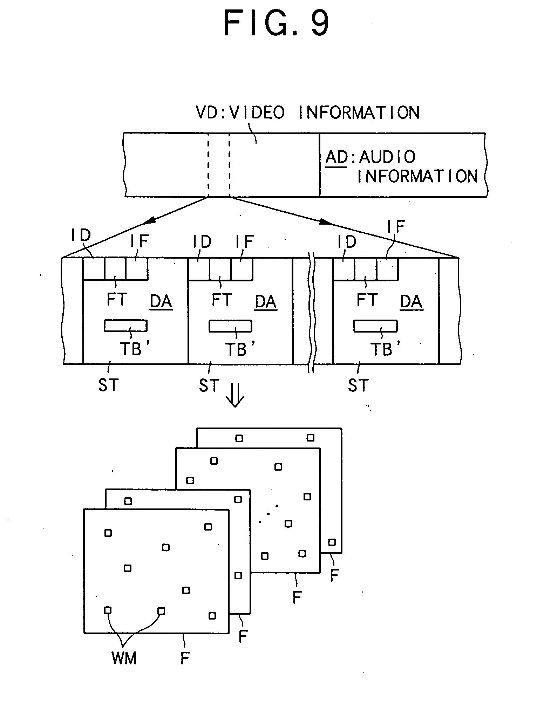

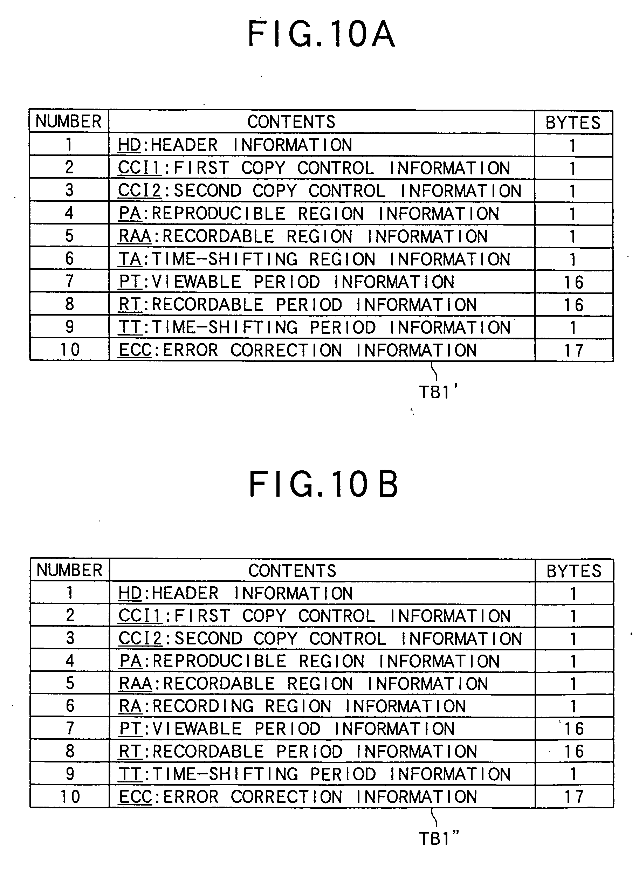

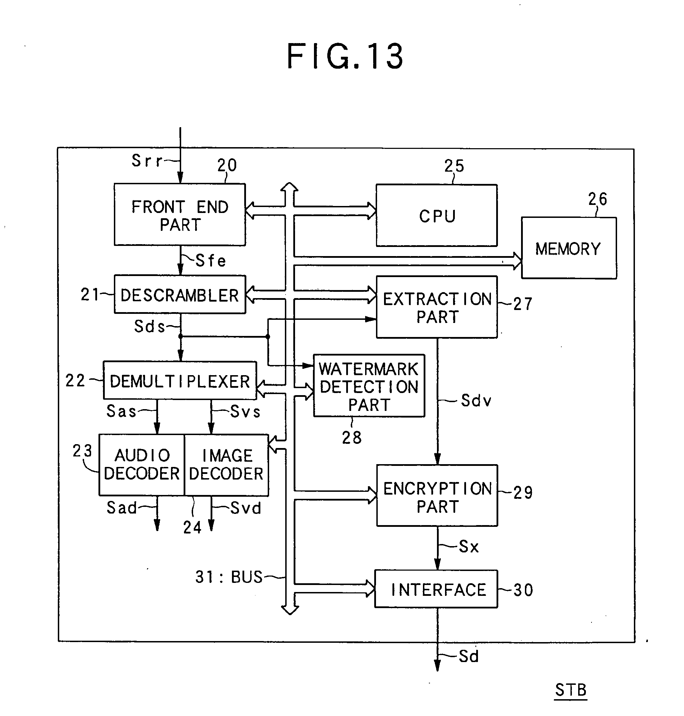

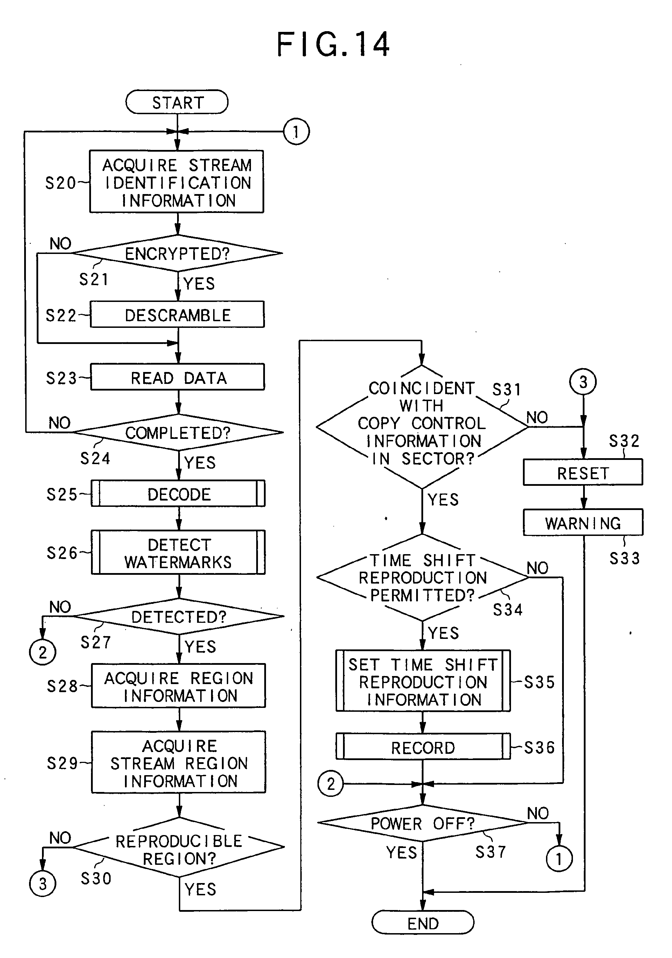

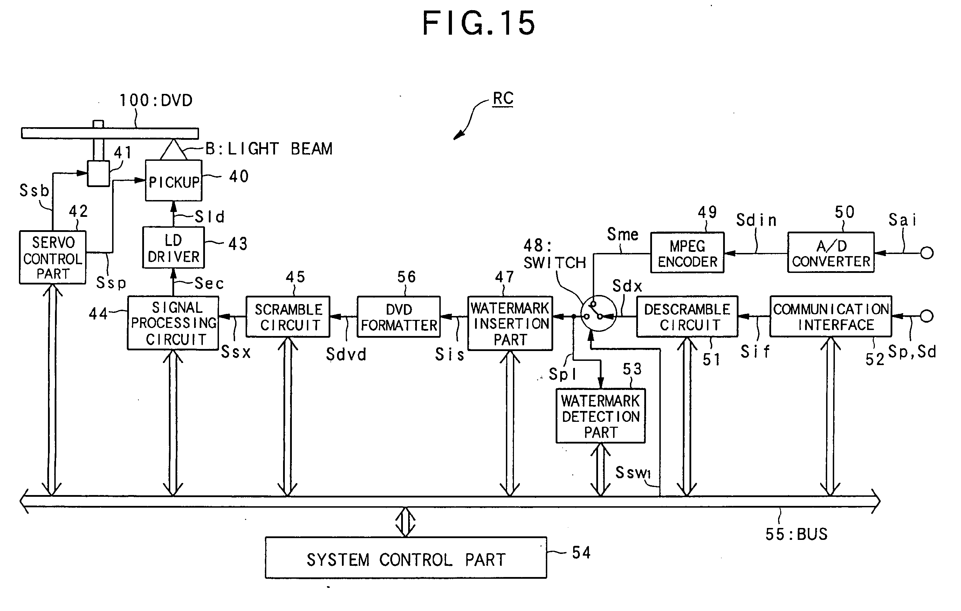

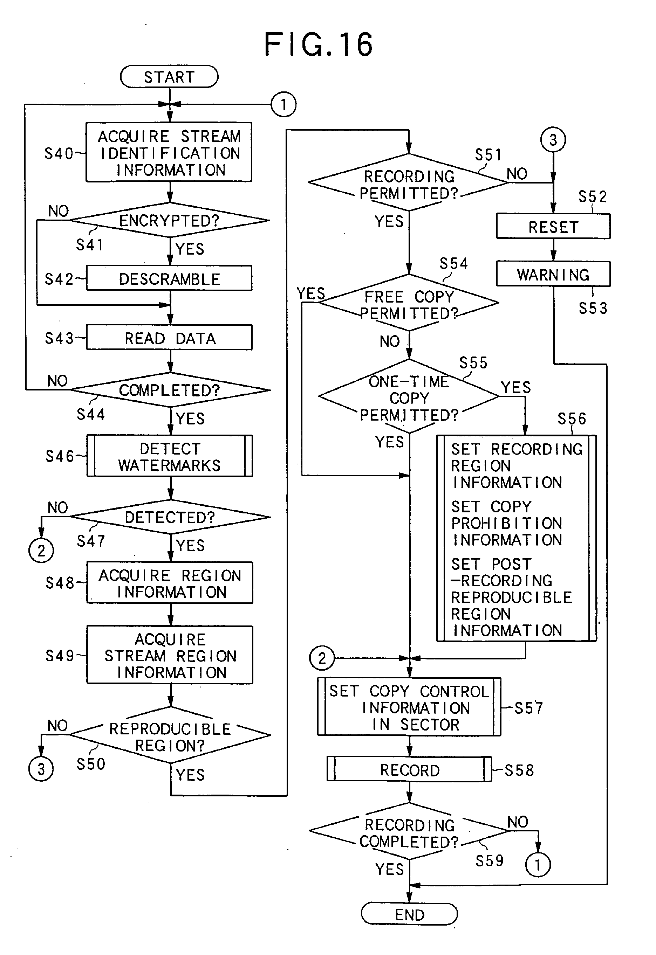

Moreover, FIG. 7 is a block diagram showing the schematic configuration of the information transmission system according to Embodiment 2, FIG. 8 is a block diagram showing the schematic configuration of a video transmission apparatus included in the information transmission system, FIG. 9 is a diagram showing a pattern of recording information transmitted in the information transmission system, FIGs. 10 to 12 are diagrams showing the specific contents of the transmitted recording information, FIG. 13 is a block diagram showing the schematic configuration of a set top box included in the information transmission system, FIG. 14 is a flowchart showing a receiving operation performed in the set top box, FIG. 15 is a block diagram showing the schematic configuration of a recorder included in the information transmission system, and FIG. 16 is a flowchart showing a recording operation performed in the recorder.

First, the overall configuration of the information transmission system according to Embodiment 2 will be described below. As shown in FIG. 7, the information transmission system SS is constituted of a video transmission apparatus M, a transmitter TX, antennas ATT and ATR, a communication satellite SR which is a geostationary satellite lofted into space, a set top box STB, a television set TV, a recorder RC, and a DVD player P which has the same configuration as that of Embodiment 1 and performs the same operation.

The outline of operations will be described below.

First, the video transmission apparatus M generates recording information to be transmitted by using the information transmission system SS, so as to include an information table of a pattern described later, and outputs the information as corresponding recording information Sr to the transmitter TX.

Hence, the transmitter TX performs predetermined modulation or the like on the recording information signal Sr and outputs the signal as an output signal Stt for satellite communication to the antenna ATT for transmission.

Then, the antenna ATT converts the output signal Sr into a radio wave for satellite transmission and transmits the radio wave to the communication satellite SR. At this point, the output signal Sr is transmitted to the communication satellite SR as a radio wave after being encrypted according to a predetermined encryption method.

Subsequently, the communication satellite SR receives a radio wave corresponding to the output signal, and the satellite SR relays and transmits the radio wave to the antenna ATR for reception.

Thus, the antenna ATR receives the relayed radio wave, generates a corresponding received signal Srr, and outputs the signal to the set top box STB.

Subsequently, the set top box STB demodulates the received signal Srr, descrambles the encryption performed upon transmission, generates an image signal Svd corresponding to image information included in transmitted recording information and a sound signal Sad corresponding to sound information included in the recording information, and outputs the signals to the television set TV. Further, the set top box STB demodulates the received signal Srr, encrypts the signal again according to an encryption method which is different from the encryption performed upon transmission, generates ' a digital output signal Sd as a digital signal, and outputs the signal to the recorder RC.

With this arrangement, the television set TV displays, on a display (not shown), an image inputted as the image signal Svd and outputs, from a speaker (not shown), sound inputted as the sound signal Sad.

Meanwhile, the recorder RC having received the digital output signal Sd records an image and sound included in the digital output signal Sd on a DVD 100 used as a recordable DVD, based on recording restriction information included in an information table (information table for a recording restriction), which is included in the image and sound and will be described later.

Then, the recording information recorded on the DVD 100 is reproduced from the DVD player P based on reproduction control information included in an information table (information table for a reproduction restriction), which is recorded with the recording information by the recorder RC and will be described later.

Referring to FIG. 8, the detailed configuration and operations of the video transmission apparatus M will be described below.

As shown in FIG. 8, the video transmission apparatus M included in the information transmission system SS is constituted of a control part 60 serving as control information adding device, a memory 61 composed of a RAM (Random Access Memory) and a ROM (Read Only Memory), a display 62, an operating part 63, a VTR (Video Tape Recorder) 64, an MPEG encoder 65, and a video signal output part 66.

The operations of the apparatus will be described below.

First, recording information to be transmitted in the information transmission system SS of Embodiment 2 is recorded in the VTR 64 in advance.

The control part 60 extracts, as recording information Svr, recording information to be transmitted in the information transmission system SS from the recording information recorded in the VTR 64 while transferring necessary information as a memory signal Sm to and from the memory 61, based on an operation signal Sin corresponding to an operation performed in the operation part 63. Then, another information table, which will be described later, is generated to be superimposed on the extracted recording information Svr and transmitted, the generated information table is embedded as a watermark in the recording information Svr extracted from the VTR 64, and recording information Scv having the embedded information table is stored again in the VTR 64. Thereafter, the VTR 64 is controlled so as to output the recording information Scv having the embedded information table to the MPEG encoder 65 at a predetermined timing.

Subsequently, the MPEG decoder 65 performs compression and modulation on the recording information Scv in compliance with the MPEG system and outputs the information as modulation information Se to the video signal output part 66.

Then, the video signal output part 66 performs a predetermined outputting operation including format conversion and encryption on the modulation signal Se and outputs the signal as the recording information signal Sr to the transmitter TX.

Referring to FIGs. 9 to 12, the following will describe a pattern of recording information outputted as the recording information signal Sr from the video transmission apparatus M.

First, as specifically shown in FIG. 9, as in the case of Embodiment 1, recording information outputted as the recording information signal Sr from the video transmission apparatus M includes at least video information VD composed of a plurality of pieces of sector information ST and audio information AD serving as sound information corresponding to the video information VD.

At this point, as with Embodiment 1, a piece of sector information ST is constituted of identification information ID, correction information FT, copy restriction information IF, and image information DA.

Further, image information DA in each piece of the sector information ST includes an information table TB' which describes region information (hereinafter, referred to as stream region information) corresponding to recording information distributed via the communication satellite SR.

The following will describe the detail of a static image included as the image information DA in each piece of sector information ST. As shown in the lower part of FIG. 9, as in the case of Embodiment 1, in a frame F serving as the static image, stream region information described as the information table TB' is embedded as watermarks WM in bits on eight places. Further, when recording information including the image information DA is received in the set top box STB, the contents of the information table TB' embedded as the watermarks WM are detected, so that reproduction restriction and recording control are performed according to the stream region information in the information table TB'.

Referring to FIG. 10, the following will describe the contents of the information table TB' serving as recording information for distribution that is included in each piece of the sector information ST.

First, the information table TB' serving as the recording information for distribution includes one of a first information table TB1' (56 bytes in total) and a first information table TB1" (56 bytes in total) of FIG. 10 and a second information table TB2 (56 bytes in total) having the same contents as those of Embodiment 1 (FIG. 2(B)).

In this case, when recording information for distribution that is outputted from the video transmission apparatus M is not allowed to be duplicated at a distribution destination, the first information table TB1' of FIG. 10(A) and the second information table TB2 are superimposed in the recording information for distribution. On the other hand, when the recording information for distribution can be freely duplicated at the distribution destination or copy is permitted once, the first information table TB1" of FIG. 10(B) and the second information table TB2 are superimposed in the recording information for distribution.

As shown in FIG. 10(A), the first information table TB1' describes, from the first byte, header information HD (1 byte) having the same contents as those of the first information table TB 1 of Embodiment 1, first copy control information CCI1 (1 byte), second copy control information CCI2 (1 byte), and reproducible region information PA (1 byte) serving as stream region information indicating countries or regions where reproduction is permitted after recording information for distribution is distributed. Furthermore, the first information table TB1' includes recordable region information RAA (1 byte) serving as stream region information indicating countries or regions where distributed recording information is permitted to be recorded on a recording medium such as the DVD 100, time-shifting region information TA (1 byte) serving as stream region information indicating countries or regions where distributed recording information is permitted to be temporarily recorded and undergo time shift reproduction after a time interval, viewable period information PT (16 bytes) indicating a time period during which distributed recording information is allowed to be reproduced and viewed at a distribution destination, recordable period information RT (16 bytes) indicating a time period during which distributed recording information is allowed to be recorded on a recording medium such as the DVD 100 at a distribution destination, time-shifting period information TT (1 byte) indicating a time period during which distributed recording information is permitted to undergo time shift reproduction at a distribution destination, and error correction information ECC (17 bytes) used for error correction when the first information table TB1' during reproduction of the image information DA.

On the other hand, as shown in FIG. 10(B), the first information table TB1" describes recording region information RA (1 byte) serving as stream region information indicating countries or regions where distributed recording information is actually recorded on a recording medium such as the DVD 100 by the recorder RC, instead of the time-shifting region information TA in the first information table TB1' of FIG. 10(A). Information other than the recording region information RA in the first information table TB1" is completely identical to that of the first information table TB'.

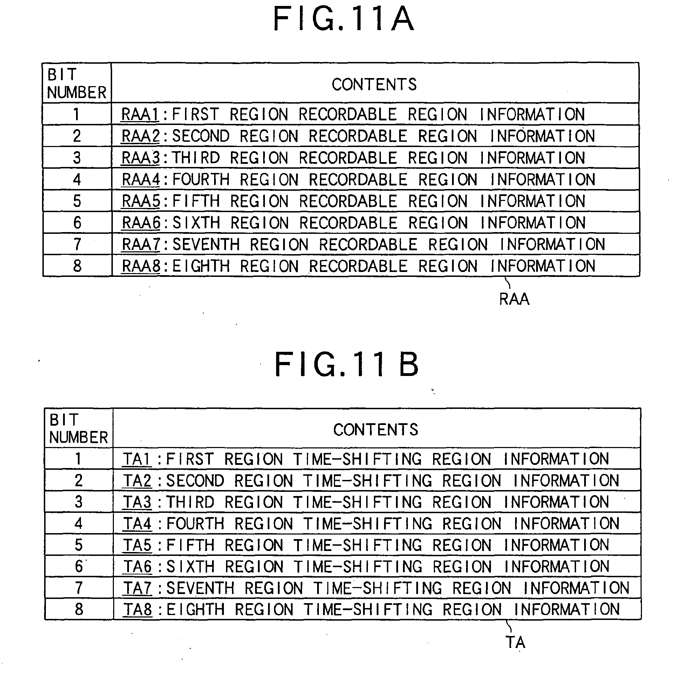

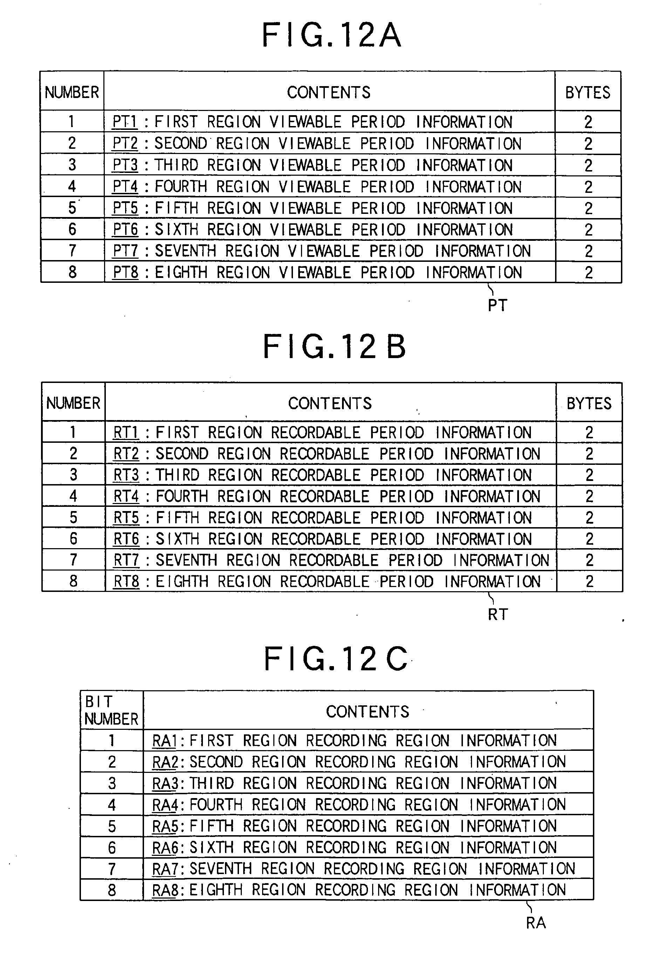

Referring to FIGs. 11 and 12, the detail of the first information tables TB1' and TB1" will be described below.

First, as shown in FIG. 11(A), as with the reproducible region information PA and so on of Embodiment 1, the recordable region information RAA included in each of the first information tables TB1' and TB1" is constituted of first region recordable region information RAA1 (1 bit) indicating whether or not distributed recording information is permitted to be recorded on the DVD 100 in a first region which is one of eight divided regions of the world, second region recordable region information RAA2 (1 bit) indicating whether or not distributed recording information is permitted to be recorded in a second region, third region recordable region information RAA3 (1 bit) indicating whether or not distributed recording information is permitted to be recorded in a third region, fourth region recordable region information RAA4 (1 bit) indicating whether or not distributed recording information is permitted to be recorded in a fourth region, fifth region recordable region information RAA5 (1 bit) indicating whether or not distributed recording information is permitted to be recorded in a fifth region, sixth region recordable region information RAA6 (1 bit) indicating whether or not distributed recording information is permitted to be recorded in a sixth region, seventh region recordable region information RAA7 (1 bit) indicating whether or not distributed recording information is permitted to be recorded in a seventh region, and eighth region recordable region information RAA8 (1 1 bit) indicating whether or not distributed recording information is permitted to be recorded in an eighth region.

Further, as specific values of the recordable region information RAA1 to RAA8 for the respective regions, when distributed recording information is permitted to be recorded on a recording medium such as the DVD 100 in a region, recordable region information corresponding to the region has a value of "1b". When recording is not permitted in the region, reproducible information corresponding to the region has a value of "0b".

Moreover, as shown in FIG. 11(B), as with the recordable region information RAA, the time-shifting region information TA included in the first information table TB1' is constituted of first region time-shifting region information TA1 (1 bit) indicating whether or not distributed recording information is permitted to undergo time shift reproduction in the first region, second region time-shifting region information TA2 (1 bit) indicating whether or not distributed recording information is permitted to undergo time shift reproduction in the second region, third region time-shifting region information TA3 (1 bit) indicating whether or not distributed recording information is permitted to undergo time shift reproduction in the third region, fourth region time-shifting region information TA4 (1 bit) indicating whether or not distributed recording information is permitted to undergo time shift reproduction in the fourth region, fifth region time-shifting region information TA5 (1 bit) indicating whether or not distributed recording information is permitted to undergo time shift reproduction in the fifth region, sixth region time-shifting region information TA6 (1 bit) indicating whether or not distributed recording information is permitted to undergo time shift reproduction in the sixth region, seventh region time-shifting region information TA7 (1 bit) indicating whether or not distributed recording information is permitted to undergo time shift reproduction in the seventh region, and eighth region time-shifting region information TA8 (1 bit) indicating whether or not distributed recording information is permitted to undergo time shift reproduction in the eighth region.

Besides, as specific values of the time-shifting region information TA1 to TA8 for the respective regions, when distributed recording information is permitted to undergo time shift reproduction in a region, time-shifting region information corresponding to the region has a value of "1b". When time shift reproduction is not permitted in the region, time-shifting region information corresponding to the region has a value of "0b".

Further, as shown in FIG. 12(A), the viewable period information PT included in each of the first information tables TB'1 and TB1" is constituted of first region viewable period information PT1 (2 bytes) indicating a time period during which distributed recording information is permitted to be reproduced and viewed in the first region, second region viewable period information PT2 (2 bytes) indicating a time period during which distributed recording information is permitted to be reproduced and viewed in the second region, third region viewable period information PT3 (2 bytes) indicating a time period during which distributed recording information is permitted to be reproduced and viewed in the third region, fourth region viewable period information PT4 (2 bytes) indicating a time period during which distributed recording information is permitted to be reproduced and viewed in the fourth region, fifth region viewable period information PT5 (2 bytes) indicating a time period during which distributed recording information is permitted to be reproduced and viewed in the fifth region, sixth region viewable period information PT6 (2 bytes) indicating a time period during which distributed recording information is permitted to be reproduced and viewed in the sixth region, seventh region viewable period information PT7 (2 bytes) indicating a time period during which distributed recording information is permitted to be reproduced and viewed in the seventh region, and eighth region viewable period information PT8 (2 bytes) indicating a time period during which distributed recording information is permitted to be reproduced and viewed in the eighth region.

Furthermore, as shown in FIG. 12(B), the recordable period information RT included in each of the first information tables TB1' and TB1" is constituted of first region recordable period information RT1 (2 bytes) indicating a time period during which distributed recording information is permitted to be recorded on a recording medium such as the DVD 100 in the first region, second region recordable period information RT2 (2 bytes) indicating a time period during which distributed recording information is permitted to be similarly recorded in the second region, third region recordable period information RT3 (2 bytes) indicating a time period during which distributed recording information is permitted to be similarly recorded in the third region, fourth region recordable period information RT4 (2 bytes) indicating a time period during which distributed recording information is permitted to be similarly recorded in the fourth region, fifth region recordable period information RT5 (2 bytes) indicating a time period during which distributed recording information is permitted to be similarly recorded in the fifth region, sixth region recordable period information RT6 (2 bytes) indicating a time period during which distributed recording information is permitted to be similarly recorded in the sixth region, seventh region recordable period information RT7 (2 bytes) indicating a time period during which distributed recording information is permitted to be similarly recorded in the seventh region, and eighth region recordable period information RT8 (2 bytes) indicating a time period during which distributed recording information is permitted to be similarly recorded in the eighth region.

The following will describe the first region viewable period information PT1 as an example of the detailed configurations of the viewable period information PT and the recordable period information RT for the respective regions.

As the first region viewable period information PT1, an information amount of 2 bytes describes a time period during which distributed recording information is permitted to be reproduced and viewed in the first region. To be specific, an information amount of 5 bits from the head describes years up to 2032 (that is, 2000 + 2⁵ years) as a starting year of the viewable period in the first region, an information amount of the subsequent four bits describes a starting month of the viewable period, an information amount of the subsequent 5 bits describes the length of the viewable period, and an information amount of the remaining 1 bit describes whether or not the viewable period is limited.

Further, the description format is similarly used in the other pieces of the viewable period information PT for the respective regions and the recordable period information RT for the respective regions.

Next, as shown in FIG. 12(C), the recording region information RA in the first information table TB1" is constituted of first region recording region information RA1 (1 bit) which is described as "1b" by the recorder RC when distributed recording information is actually recorded on the DVD 100 by the recorder RC in the first region and which is described as "0b" when the recorded region is not the first region, second region recording region information RA2 (1 bit) which is described as "1b" when distributed recording information is actually recorded in the second region and which is described as "0b when the recorded region is not the second region, third region recording region information RA3 (1 bit) which is described as "1b" when distributed recording information is actually recorded in the third region and which is described as "0b when the recorded region is not the third region, fourth region recording region information RA4 (1 bit) which is described as "1b" when distributed recording information is actually recorded in the fourth region and which is described as "0b" when the recorded region is not the fourth region, fifth region recording region information RA5 (1 bit) which is described as "1b" when distributed recording information is actually recorded in the fifth region and which is described as "0b" when the recorded region is not the fifth region, sixth region recording region information RA6 (1 bit) which is described as "1b" when distributed recording information is actually recorded in the sixth region and which is described as "0b" when the recorded region is not the sixth region, seventh region recording region information RA7 (1 bit) which is described as "1b" when distributed recording information is actually recorded in the seventh region and which is described as "0b" when the recorded region is not the seventh region, and eighth region recording region information RA8 (1 bit) which is described as "1b" when distributed recording information is actually recorded in the eighth region and which is described as "0b when the recorded region is not the eighth region.

Finally, time-shifting period information TT included in the first information tables TB1' and TB1" describes a time period during which distributed recording information is permitted to undergo time shift reproduction, that is, a time period during which recording information received by the set top box STB can be subjected to time shift reproduction while an upper limit value is set at 168 hours (one week).

Referring to FIGs. 13 and 14, the following will describe the detailed configuration and operations of the set top box STB for receiving recording information which has the superimposed information table TB' including the first information table TB1' or TB1" configured thus and the second information table TB2 and which is transmitted via the communication satellite SR.

FIG. 13 is a block diagram showing the schematic configuration of the set top box STB, and FIG. 14 is a flowchart showing demodulation in the set top box STB.

As shown in FIG. 13, regarding the set top box STB for demodulating recording information which is received by the antenna ATR via the communication satellite SR and is inputted as the received signal Srr, as described above, the digital output signal Sd can be outputted to the recorder RC and the image signal Svd and the sound signal Sad can be outputted to the television set TV. To be specific, the set top box STB is constituted of a front end part 20, a descrambler 21, a demultiplexer 22, a sound decoder 23, an image decoder 24, a CPU 25, a memory 26, an extraction part 27, a watermark detection part 28, an encryption part 29, and an interface 30. The components can transfer control information and so on via the bus 31. Besides, the CPU 25 stores region information indicating countries or regions where the set top box STB should be installed and operated.

The operations will be described below.

The following will firstly describe the operations of the set top box STB when the received signal Srr is outputted as the image signal Svd and the sound signal Sad to the television set TV.

In this case, as described above, in the received signal Srr, sound information and image information are compressed in compliance with the MPEG system and are inputted while being encrypted.

Then, the front end part 20 performs a predetermined receiving operation on the received signal Srr, generates a processed received signal Sfe, and outputs the signal to the descrambler 21.

Subsequently, the descrambler 21 descrambles the encryption of recording information included in the processed received signal Sfe, generates a descramble signal Sds, and outputs the signal to the demultiplexer 22.

Thus, the demultiplexer 22 separates sound information and image information that are included in the descramble signal Sds, outputs the separated sound information as separate sound signal Sas to the sound decoder 23, and outputs the separated image information as a separate image signal Svs to the image decoder 24.

Then, the sound decoder 23 decodes the sound signal Sas and outputs the signal as a sound signal Sad to the television set TV.

On the other hand, the image decoder 24 decodes the image signal Svs and similarly outputs the signal as an image signal Svd to the television set TV.

At this point, the CPU 25 exercises control over the components while transferring necessary control information via the bus 31. Additionally, required information is used for the control while being temporarily stored in the memory 26 via the bus 31.

Subsequently, the following will describe the operations of the set top box STB when recording information acquired as the received signal Srr is outputted as the digital output signal Sd to the recorder RC.

In the case where the digital output signal Sd is outputted to the recorder RC, first, when the received signal Srr is inputted to the set top box STB, the descramble signal Sds is generated by the operations of the front end part 20 and the descrambler 21, and is outputted to the extraction part 27 and the watermark detection part 28.

Thus, the extraction part 27 extracts only recording information to be recorded on the DVD 100 from the descramble signal Sds in the recorder RC, generates an extraction signal Sdv, and outputs the signal to the encryption part 29.

In parallel with the operation, the watermark detection part 28 extracts the information table TB', which is superimposed in recording information included in the descramble signal Sds, and outputs the contents to the CPU 25 via the bus 31.

Then, as shown in FIG. 14 described later, when recording information is demodulated based on the contents of the information table TB', the recording information after demodulation is temporarily recorded with the information table TB' in an external storage apparatus (to be specific, e.g., a hard disc device) included in the memory 26. Subsequently, the recording information is read from the external storage apparatus as necessary and is outputted to the encryption part 29 so as to be outputted to the recorder RC.

Thus, the encryption part 29 encrypts the extraction signal Sdv according to encryption using an encryption key which is set by mutual authentication with the recorder RC in the interface 30, generates an encryption signal Sx, and outputs the signal to the interface 30.

Then, the interface 30 performs predetermined interface processing on the encryption signal Sx and outputs the signal as the digital output signal Sd to the recorder RC. In this case, the information table TB' in the recording information included in the received signal Srr is also superimposed as it is in the recording information and is outputted to the recorder RC.

At this point, the CPU 25 exercise control over the components based on the contents of the information table TB' detected by the watermark detection part 28 while transferring necessary control information via the bus 31. Further, necessary information is used for the control while being temporarily stored in the memory 26 via the bus 31.

Referring to the flowchart of FIG. 14, the following will describe the outline of demodulation performed in the set top box STB configured thus. The following explanation will discuss demodulation when recording information acquired as the received signal Srr is outputted as the digital output signal Sd to the recorder RC.

As shown in FIG. 14, in the demodulation according to Embodiment 2, identification information ID in the sector information ST is firstly detected from recording information inputted as the received signal Srr (step S20).

Subsequently, information in the sector information ST that is reproduced after the identification information ID is read and it is confirmed whether or not the information is encrypted (step S21). Then, when the information is not encrypted (step S21; NO), an advance is made to step S23, which will be described later. When the information is encrypted (step S21; YES), the encryption is descrambled in the descramble circuit 21 (step S22) and the received recording information is read while the descrambling is performed (step S23).

Then, whether reading of necessary information is completed is monitored all the time during reading of the recording information (step S24). When reading is not completed (step S24; NO), a return is made to step S20 to reproduce recording information in the subsequent sector information ST. Meanwhile, when reading of necessary recording information is completed (step S24; YES), the read recording information (descramble signal Sds) is decoded in the extraction part 27 (step S25) and the watermarks WM are detected from information corresponding to the sector information ST included in the descramble signal Sds in the watermark detection part 28 (step S26).

Subsequently, it is confirmed whether or not the watermarks WM are detected (step S27). When the watermarks WM are not detected (step S27; NO), it is decided that reproduction restriction is not necessary on recording information in the currently received signal Srr and an advance is made to step S37, which will be described later. Meanwhile, when the watermarks WM are detected (step S27; YES), region information which is stored in the CPU 25 and corresponds to the set top box STB is acquired (step S28), the contents of the table TB' or TB1" and the second information table TB2 are extracted in the watermark detection part 28 from the watermarks WM detected in step S26, the reproducible region information PA and the recordable region information RAA that serve as stream region information are acquired (step S29).

Then, based on the acquired reproducible region information PA, it is confirmed whether or not reproduction is permitted on the recording information in the received signal Srr in the regions indicated by the region information acquired in step S28, that is, in the countries or regions where the set top box STB should be installed and operated (step S30). Then, when the reproducible region information PA does not indicate that the installation region of the set top box STB is a reproducible region of the recording information (step S30; NO), since the recording information cannot be demodulated by the set top box STB, the set top box STB is reset to forcefully terminate demodulation on the received signal Srr (step S32), a warning is issued on a display or the like to indicate that the demodulation cannot be performed (step S33), and a series of demodulating operations is completed.

On the other hand, in step S30, when it is decided based on the reproducible region information PA that the installation region of the set top box STB is a reproducible region of recording information included in the received signal Srr (step S30; YES), confirmation is subsequently performed on the detected contents of the copy restriction information IF in the sector information ST and the detected (steps S26 and S27) contents of the copy control information ACCI for the respective regions in the first information table TB1', and it is confirmed whether or not coincidence is made between the contents of the copy restriction information IF corresponding to the region indicated by the region information and the contents of the copy control information ACCI for the respective regions that correspond to the region (that is, whether or not illicit tampering is performed on any one of the information) (step S31).

When coincidence is made between the contents of the copy restriction information IF corresponding to the region indicated by the region information and the contents of the copy control information ACCI for the respective regions that correspond to the region (step S31; YES), it is decided that illicit tampering is not performed on the recording information in the received signal Srr. Subsequently, based on the time-shifting region information TA acquired in step S29, it is confirmed whether or not time shift reproduction can be performed on the recording information in the received signal Srr in the region indicated by the region information acquired in step S28 (step S34). Then, when it is not decided that the installation region of the set top box STB is a time shift reproducible region of the recording information based on the time-shifting region information TA (step S34; NO), an advance is made to step S37, which will be described later.

Meanwhile, in step S34, when it is decided that the installation region of the set top box STB is a time shift reproducible region of the recording information (step S34; YES), information indicating that time shift reproduction is performed and the detected time-shifting period information TT are set (step S35), and the recording information decoded from the received signal Srr together with the set time-shifting period information TT is recorded in an external storage apparatus (to be specific, for example, a hard disc device) included in the memory 26 (step S36).

Then, it is confirmed whether all the pieces of recording information are recorded and it is confirmed whether or not the power of the set top box STB should be turned off (step S37). When the power is turned off (step S37; YES), a series of demodulating operations is completed.

On the other hand, in step S37, when it is decided that demodulation is continued (step S37; NO), a return is made to step S20 and the series of operations is repeated.

On the other hand, in step S31, when it is decided that coincidence is not made between the contents of the copy restriction information IF corresponding to the region indicated by the region information and the contents of the copy control information ACCI for the respective regions that correspond to the region (step S31; NO), there is a probability that illicit tampering is performed on the recording information in the received signal Srr. Therefore, it is decided that the currently received recording information should not be demodulated, the set top box STB is reset to forcefully terminate demodulation in the set top box STB (step S32), a warning is issued on the display or the like (not shown) to indicate that the recording information cannot be demodulated (step S33), and the series of demodulating operations is completed.

Finally, referring to FIGs. 15 and 16, the following will describe the detailed configuration and operations of the recording RC which records the digital output signal Sd outputted from the set top box STB on the DVD 100 while the information table TB' is superimposed which include the first information table TB1' or TB1" configured thus and the second information table TB2.

FIG. 15 is a block diagram showing the schematic configuration of the recorder RC, and FIG. 16 is a flowchart showing a recording operation in the recorder RC.

As shown in FIG. 15, the recorder RC for storing recording information in the recordable DVD 100 is constituted of a pickup 40, a spindle motor 41, a servo control part 42, a LD (LASER Diode) driver 43, a signal processing circuit 44, a scramble circuit 45, a switch 48, a watermark insertion part 47 serving as control information adding device, an MPEG encoder 49, an A/D (Analog/Digital) converter 50, a descramble circuit 51, a communication interface 52, a watermark detection part 53, a system control part 54, and a DVD formatter 56. The servo control part 42, the signal processing circuit 44, the scramble circuit 45, the watermark insertion part 47, the descramble circuit 51, the communication interface 52, the watermark detection part 53, and the system control part 54 are connected via a bus 55 to transfer control information or the like to one another.

The operations will be described below.

First, recording information outputted as the digital output signal Sd from the set top box STB is compressed according to a compressing system in compliance with the MPEG system and the recording information is recorded on the DVD 100. Further, the recording information is encrypted according to a predetermined ' encryption scheme after compression and is recorded, and the information table TB' is embedded (multiplexed) as the watermarks WM and recorded in the recording information.

Moreover, in addition to recording of the digital output signal Sd on the DVD 100, the recorder RC can digitize analog information (including both of analog sound information and analog image information) from the outside and record the information on the DVD 100.

When recording information is recorded on the DVD 100, in the recorder RC, the spindle motor 41 firstly rotates the DVD 100 at a predetermined rotational speed. The spindle motor 41 is driven based on the spindle control signal Ssb, which will be described later.

Then, the A/D converter 50 digitizes the analog information Sai inputted from the outside, generates a digital input signal Sdin, and outputs the signal to the MPEG encoder 49.

Subsequently, the MPEG encoder 49 performs compression on the digital input signal Sdin in compliance with the MPEG system, generates a compression signal Sme, and outputs the signal to the switch 48.

Meanwhile, the communication interface 52 performs predetermined input interface processing on the digital output signal Sd under the control of the system control part 54 via the bus 55, and outputs the signal as a processing signal Sif to the descramble circuit 51.

Then, the descramble circuit 51 decodes, under the control of the system control part 54 via the bus 55, the encryption performed on recording information (that is, recording information which is demodulated and is transmitted in the set top box STB) included in the processing signal Sif, generates a decoding signal Sdx, and outputs the signal to the switch 48.

Thus, the switch 48 selects one signal inputted at that time from the decoding signal Sdx and the compression signal Sme based on a switching signal Ssw1 from the system control part 54, and outputs the signal as a switch signal Sp1 to the watermark insertion part 47 and the watermark detection part 53.

Hence, the watermark detection part 53 detects, under the control of the system control part 54 via the bus 55, the information table TB' included in the switch signal Sp1, and outputs the contents of the signal to the system control part 54.

Subsequently, based on the contents of the outputted information table TB', when it is decided that the analog information Sai currently inputted to the recorder RC or the recording information included in the digital output signal Sd is prohibited from being recorded on the DVD 100, the system control part 54 controls the components so as to suspend the subsequent recording operation of the analog information signal Sai or the digital output signal Sd according to processing described below.

Besides, as a specific configuration of the detail of the watermark detection part 53, as with the watermark detection part 6, a watermark detection part configured as disclosed in paragraphs [0035] to [0053] and FIG. 3 of Japanese Patent Laid-Open publication No. 11-98341 is suitable.

Meanwhile, under the control of the system control part 54 via the bus 55, the watermark insertion part 47 inserts the information table TB', which has the contents applicable to the recording information recorded on the DVD 100, into the switch signal Sp1, generates an insertion signal Sis, and outputs the signal to the DVD formatter 56.

To be specific, for example, of the copy control information CCI in the information table TB' included in the inputted digital output signal Sd, when the contents of the copy control information CCI corresponding to a country or region where the recorder RC is installed permit the corresponding recording information to be recorded on the DVD 100 only once in the region, of the copy control information CCI in the information table TB' inserted by the watermark insertion part 47, as the copy control information CCI corresponding to the country or region where the recorder RC is installed, copy prohibition information is inserted which indicates that copy and recording are prohibited thereafter.

Then, the DVD formatter 56 converts the insertion signal Sis into a recording format for the DVD 100, generates a format signal Sdvd, and outputs the signal to the scramble circuit 45.

Hence, under the control of the system control part 54 via the bus 55, the scramble circuit 45 encrypts the recording information (including the information table TB' having the contents applicable to the recording information having been recorded on the DVD 100) included in the format signal Sdvd by using a predetermined encryption key, generates an encryption signal Ssx, and outputs the signal to the signal processing circuit 44.

Subsequently, under the control of the system control part 54 via the bus 55, the signal processing circuit 44 performs recording processing such as waveform shaping on the encryption signal Ssx, generates a processing signal Sec, and outputs the signal to the LD driver 43.

Then, the LD driver 43 performs processing such as amplification on the processing signal Sec, generates a driving signal Sld for driving a semiconductor laser (semiconductor laser for irradiating the DVD 100 with a light beam B for recording, not shown) in the pickup 40, and outputs the signal to the pickup 40.

Hence, the pickup 40 emits the light beam B for recording (the light beam B changes in intensity according to the contents of recording information to be recorded) to the rotating DVD 100 and records the recording information including the information table TB' on a corresponding position on the DVD 100.

At this point, between the condensing position of the light beam B and the position of an information track for storing the recording information on the DVD 100, a displacement can be eliminated by driving an actuator (not shown) in response to a pickup servo signal Ssp, which is outputted from the servo control part 42 under the control of the system control part 54 via the bus 55, to change the position of an objective lens (not shown) for condensing the light beam B on the information track.

In parallel with the operations of these components, the system control part 54 prevents the illicit reproduction and illicit recording and exercises control over the operations of the components via the bus 55.

Referring to the flowchart of FIG. 16, the following will describe a recording operation performed in the recorder RC configured thus. The following explanation will describe a recording operation in which the switch 48 is connected to the descramble circuit 51 and recording information outputted as the digital output signal Sd from the set top ' box STB is recorded on the DVD 100.

As shown in FIG. 16, in the recording operation of Embodiment 2, an identification information ID in the sector information ST is firstly detected from recording information inputted as the digital output signal Sd (step S40).

Subsequently, information in the sector information ST reproduced after the identification information ID is read, and it is confirmed whether the information is encrypted or not (step S41). Then, when the information is not encrypted (step S41; NO), an advance is made to step S43, which will be described later. Meanwhile, when the information is encrypted (step S41; YES), the encryption is descrambled in the descramble circuit 51 (step S42) and recording information in the inputted digital output signal Sd is read while descrambling is performed (step S43).

Subsequently, while the recording information is read, whether reading of necessary information is completed is monitored all the time (step S44). When reading is not completed (step S44; NO), a return is made to step S40 to reproduce recording information in the subsequent sector information ST. On the other hand, when reading of necessary recording information is completed (step S44; YES), the watermarks WM are detected in the watermark detection part 53 from information corresponding to the sector information ST included in the decoding signal Sdx (step S46).

Then, it is confirmed whether or not the watermarks WM are detected (step S47). When the watermarks WM are not detected (step S47; NO), it is decided that recording information in the currently inputted digital output signal Sd is recorded as it is and an advance is made to step S57, which will be described later. On the other hand, when the watermarks WM are detected (step S47; YES), region information is acquired which is stored in the system control part 54 and corresponds to the recorder RC (step S48), the contents of the first information table TB1' or TB1" and the second information table TB2 are extracted in the watermark detection part 53 from the watermarks WM detected in step S46, and the reproducible region information PA, the recordable region information RAA, and so on are acquired as stream region information (step S49).

Subsequently, based on the acquired recordable region information RAA, it is confirmed whether or not recording information in the digital output signal Sd can be recorded in regions indicated by the region information acquired in step S48, that is, countries or regions where the recorder RC should be installed and operated (step S50). Then, when it is decided based on the recordable region information RAA that the installation region of the recorder RC is not a recordable region of the recording information (step S50; NO), since the recording information cannot be recorded on the DVD 100 by the recorder RC, the recorder RC is reset to forcefully terminate the recording operation (step S52), a warning is issued on the display or the like to indicate that the recording operation cannot be performed (step S53), and a series of recording operations is completed.

On the other hand, in step S50, when it is decided based on the recordable region information RAA that the installation region of the recorder RC is a recordable region of recording information included in the digital output signal Sd (step S50; YES), of the copy control information CCI in the first information table TB1' or TB1" detected from the digital output signal Sd, confirmation is made on the contents of the copy control information CCI that correspond to the ' country or region where the recorder RC is installed (step S51).

Then, when the copy control information CCI decided in step S51 has contents of copy prohibition information for prohibiting copy and recording of the recording information thereafter or the contents of copy prohibition information indicating that the corresponding recording information should be originally prohibited from being duplicated or recorded (step S51; NO), it is decided that the recording information in the digital output signal Sd should not be recorded on the DVD 100, the recorder RC is reset to forcefully terminate the recording operation in the recorder RC (step S52), a warning is issued on the display or the like to indicate that the recording information cannot be recorded (step S53), and a series of demodulating operations is completed.

On the other hand, when the contents of the copy control information CCI decided in step S51 has the contents permitting the corresponding recording information to be recorded on the DVD 100 only once in the region or the contents indicating that copy restriction is not imposed on the corresponding recording information in the region (step S51; YES), it is confirmed whether or not the copy control information CCI decided in the step S51 has contents indicating that copy restriction is not imposed on the corresponding recording information in the region (step S54).

Then, in step S54, when it is decided that the contents of the copy control information CC 1 indicate that copy restriction is not imposed on the corresponding recording information in the region (step S54; YES), an advance is made to step S57, which will be described later, to start recording the recording information on the DVD 100.

On the other hand, when the contents of the copy control information CCI do not indicate that copy restriction is not imposed on the corresponding recording information in the region (step S54; NO), it is confirmed again whether or not the contents of copy control information CCI decided in step S51 permit the corresponding recording information to be duplicated and recorded only once on the DVD 100 in the region (step S55). When copy and recording are not permitted only once, that is, the contents of the copy control information CCI for the region has undefined value(step S55; NO), then regarding it as "no copy restriction", an advance is made to step S57, which will be described later, to start recording the recording information on the DVD 100.

Furthermore, when the contents of the copy control information CCI decided in step S51 permit the corresponding recording information to be duplicated and recorded only once on the DVD 100 in the region (step S55; YES), information is rewritten in the information table TB' (step S56), and an advance is made to step S57, which will be described later.

The following will describe the processing of step S56 in detail. In the processing of step S56, firstly, when recording is permitted in the decision of step S5, the first information table TB1" and the second information table TB2 are superimposed as the information table TB' which is superimposed on the corresponding recording information. Thus, in this case, of the recording region information RA in the first information table TB1", recording region information RA corresponding to a country or region for installing the recorder RC is set at "1b".

Subsequently, only when recording information permitted to be recorded (step S5; YES) is allowed to be duplicated and recorded only once in the country or region where the recorder RC is installed, of the copy control information CCI in the corresponding first information table TB1", regarding the copy control information CCI corresponding to the country or region where the recorder RC is installed, the contents are rewritten from "copy and recording are permitted only once" to "copy control is prohibited thereafter".

Thirdly, in order to specify a country or region where the recording information can be reproduced after being recorded on the DVD 100 by the recorder RC, by using values corresponding to post-recording reproducible region information RP1 to RP8 for the respective regions that are included in the post-recording reproducible region information RP (FIG. 2(B)) included in the second information table TB2, the values of the corresponding reproducible region information PA1 to PA8 for the respective regions are rewritten. The information PA1 to PA8 are included in the reproducible region information PA included in the first information table TB1".

When rewriting is completed for the contents of the information table TB', the contents of the copy control information CCI included in the rewritten information table TB' are subsequently used to set copy restriction information IF in the sector information ST after recording (step S57), and the recording information is recorded on the DVD 100 while including the information (steps S56 and S57) set so far (step S58).

Then, it is confirmed whether or not recording of all the pieces of recording information on the DVD 100 is completed (step S59). When the recording is not completed (step S59; NO), a return is made to step S40 to perform a recording operation on recording information to be recorded next. When recording is completed for all the pieces of recording information to be recorded (step S59; YES), a series of recording operations is completed.

Besides, the operations of the DVD player P included in the information transmission system SS of Embodiment 2 are completely the same as those of the DVD player P of Embodiment 1 in that recording information recorded on the DVD 100 by the recorder RC is reproduced while reproduction restriction is imposed based on the information table TB' superimposed on the recording information. Thus, the detailed explanation is omitted.

As described above, according to the operations of the information transmission apparatus M, the set top box STB, the recorder RC, and the DVD player P of Embodiment 2, stream region information such as the reproducible region information PA and the recordable region information RAA is superimposed on recording information before distribution and recording. Hence, even when only recording information having the superimposed stream region information is illicitly duplicated, it is possible to positively manage and control, for each of the regions, permission to record or reproduce the recording information after the illicit copy.

Therefore, it is possible to positively prevent the illicit copy as necessary.

Further, copy restriction information for each of the regions is also superimposed on recording information together with stream region information. Thus, even when only the recording information is illicitly duplicated, it is possible to positively decide permission to record or reproduce the recording information after the illicit copy and to positively impose copy restriction for each of the regions.

Moreover, since the viewable period information PT and recordable period information RT for each of the regions are included in the information table TB', it is possible to manage and control permission for recording or reproduction while adding the lapse of time for each of the regions.

To be specific, even when recording information such as a movie is legally recorded on the DVD 100 in North America and is brought to Japan, in the case where the information is brought to Japan when the movie is showing on theaters, it is possible to impose a reproduction restriction such as prohibition of reproduction. Therefore, it is possible to conduct more effective advertisement activities in the distribution and delivery of the movie.

Furthermore, in the recorder RC, when the recording information is permitted to be recorded on the DVD 100 based on the information table TB' in the transmitted recording information, the contents of the information table TB' are changed, for each region, to the contents of the information table TB' corresponding to recording information having been recorded on the DVD 100 and the contents are recorded. Thus, it is possible to manage and control the permission for re-recording or re-reproduction after the recording.

Further, when the detected contents of the copy restriction information IF in the sector information ST and the detected contents of the copy restriction information ACCI for the respective regions coincide with each other, recording information is reproduced. When the contents of the copy restriction information IF and the contents of the copy restriction information ACCI for the respective regions do not coincide with each other, the reproduction of recording information is prohibited. Thus, even when the copy restriction information ACCI for the respective regions is illicitly tampered, it is possible to properly detect the illicit tampering and positively prevent recording information from being illicitly reproduced or recorded thereafter.

### (III) Embodiment 3

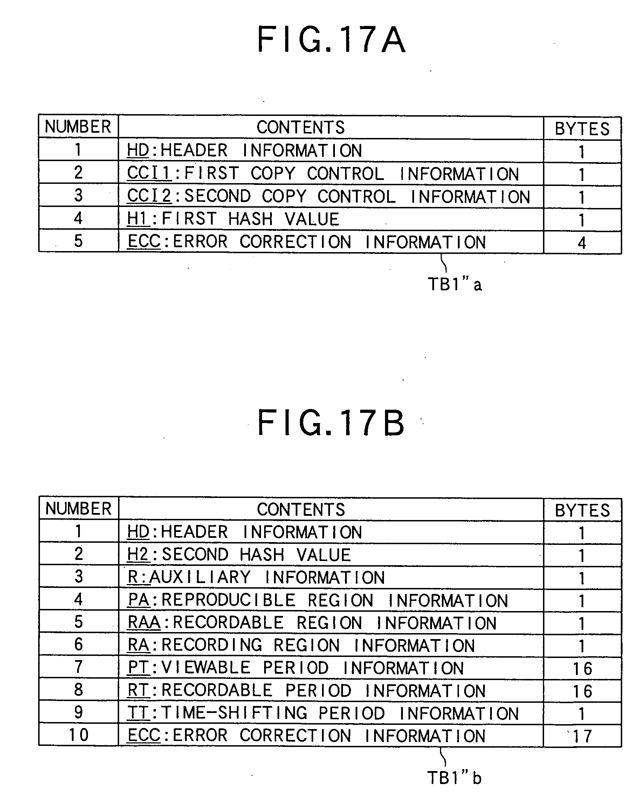

Referring to FIG. 17, the following will describe Embodiment 3, which is another embodiment of the present invention. FIG. 17 is a diagram showing the detailed configuration of an information table according to Embodiment 3.

In the foregoing Embodiment 1 and Embodiment 2, an information table TB or TB' includes the first information table TB1, the second information table TB2 (Embodiment 1), the first table TB1' or TB1", and the second information table TB2 (Embodiment 2). In the following Embodiment 3, an information table TB1 (TB1' or TB1") is divided into two and is superimposed in recording information so as to have correlation for preventing tampering. An example of dividing the information table TB1" of Embodiment 2 will be discussed below to describe Embodiment 3.

The configuration and operations of an information transmission system according to Embodiment 3 are completely the same as the those of the information transmission system SS of Embodiment 2 except for the pattern of the used information table, which will be described later. Thus, the detailed explanation thereof is omitted.

As shown in FIG. 17, of information tables used in the information transmission system of Embodiment 3, the first information table is embedded into a sector information ST as watermarks WM while being divided into a sub information table TB1"a and a sub information table TB1"b.

As shown in FIG. 17(A), the sub information table TB1"a includes, from the first byte, header information HD (1 byte) similar to that of the first information table TB1", first copy control information CCI1 (1 byte), and second copy control information CCI2 (1 byte). In addition, the sub information table TB1"a includes a first hash value H1 (1 byte) and error correction information ECC (4 bytes). The first hash value H 1 is obtained by converting the contents of the sub information table TB1"b by using a predetermined hash function when bit values (second hash value H2, described later) included in a second byte of the sub information table TB1"b, which will be described later, are all set at "0", and the error correction information ECC is used for error correction when the sub information table TB1"a is detected during the distribution or recording of recording information.

On the other hand, as shown in FIG. 17(B), the sub information table TB1"b includes, from the first byte, header information HD (1 byte) indicating that the subsequent information is included in the sub information table TB1"b, a second hash value H2 having the contents described later, auxiliary information R describing no significant information, reproducible region information PA (1 byte) similar to that of the first information table TB1", recordable region information RAA (1 byte), recording region information RA (1 byte), viewable period information PT (16 bytes), recordable period information RT (16 bytes), time-shifting period information (1 byte) TT, and error correction information ECC.

At this point, as the second hash value H2, a hash value is described which is obtained by converting the sub information table TB1"a by using the hash function. Besides, when values of the first hash value H1 included in the first sub information table TB1"a are all set at "0", it is not possible to correctly prevent tampering by using hash values. Thus, the auxiliary information R is set at a proper value to prevent all the values of the first hash value H1 from being set at "0".

In Embodiment 3 where the first information table is constituted of the sub information tables TB1"a and TB1"b configured thus, for example, in demodulation in a set top box STB, the sub information table TB1"a is firstly detected and the contents are recognized in a CPU 25. When no value is "O" regarding the first hash value H1 included in the sub information table TB1"a, it is recognized in the set top box STB that the sub first information table TB1"b is present in addition to the sub information table TB1"a, and the sub information table TB1"b is subsequently detected. At this point, when the detected sub information table TB1"b is illicitly tampered, the contents of the first hash value H1, which is obtained by converting the contents of the tampered sub information table TB1"b by using the hash function, are different from the contents of the first hash value H 1 to be originally included in the sub information table TB1"a (that is, the first hash value H 1 corresponding to the sub information table TB1"b not being tampered). Hence, it is possible to detect in the CPU 25 whether or not the contents of the sub information table TB1"b are tampered when the sub information table TB1"b is detected.

Meanwhile, when the sub information table TB1"a having been detected is illicitly tampered, the contents of the second hash value H2 obtained by converting the contents of the tampered sub information table TB1"a by using the hash function are different from the contents of the second hash value H2 to be originally included in the sub information table TB1"b (that is, the second hash value H2 corresponding to the sub information table TB1"a not being tampered). Hence, it is possible to recognize whether or not the sub information table TB1"a having been detected is tampered when the sub information table TB1"b is detected.

When tampering is detected on the sub information table TB1" or TB1"b, demodulation on recording information in the set top box STB is forcefully terminated at this point, so that it is possible to prevent demodulation from being performed on illicitly tampered recording information.

Further, also during the recording operation in the recorder RC, it is similarly detected in a system control part 54 whether the sub information table TB1"a or TB1"b is tampered, so that it is possible to prevent illicit recording from being performed on the DVD 100.

Moreover, also during reproduction in the DVD player P, it is similarly detected in the system control part 7 whether the sub information table TB1"a or TB1"b is tampered, so that it is possible to prevent illicit reproduction from being performed on the DVD 100.

As described above, according to the pattern of the first information table of Embodiment 3, in addition to the effect of the operations of the information transmission system in Embodiment 2, stream region information and copy restriction information CCI that correspond to a piece of recording information are separately superimposed as the sub tables TB1"a and TB1" on the recording information so that correlation is provided using a predetermined hash value between the stream region information and the copy restriction information CCI. Thus, even when only recording information is illicitly tampered (that is, the correlation is altered) and duplicated after the recording information is distributed, it is possible to positively detect the illicit tampering and to positively manage and control, for each region, the permission for copy and the permission to record or reproduce the recording information after the copy.

Besides, in Embodiment 3, as the first hash value H1 and the second hash value H2, the value obtained by converting the contents of the sub information table TB1"a by using the hash function and the value obtained by converting the contents of the sub information table TB1"b by using the hash function are recorded, respectively. Additionally, tampering can be prevented by using a hash table which is derived from a predetermined specific value and a relational expression.

### (IV) Application Example

The following will describe an example of a specific configuration for preventing recording restriction or reproduction restriction by actually using the present invention configured thus.

First, while time shift reproduction is performed on recording information in a set top box STB, the recording information being permitted to undergo one-time copy recording and time shift reproduction by an information table TB', when first copy and recording are simultaneously performed in a recorder RC, the recorder RC may be configured so as to prohibit simultaneous copy and recording on another recordable DVD during the time shift reproduction.

Secondary, as to recording information permitted to undergo one-time copy and recording, for example, a reproducible region is only set at North America and Europe in the information table TB', whereas a recordable region of the recording information is set at only Europe in the information table TB'. In this case, the recording information is distributed in Europe while one-time copy and recording is permitted, and thus the recording information is distributed as recording information completely prohibited from copy and recording in North America. In this case, the recording information is permitted to undergo one-time copy in a limited region, thereby imposing different recording/reproduction restrictions for the respective regions.

Further, thirdly, as to recording information where one-time copy recording is permitted, by regarding the recording information as prohibiting copy if recording region information RA in the information table TB' is not set, recording region information RA can be used as one-time copy permission information specific to a region.

Furthermore, fourthly, in one region (e.g., North America), as to a movie serving as recording information, the viewable period of the movie is set to start from, for example, February of 2001 in viewable period information PT, the recordable period of the movie is set at, for example, one month from April of 2001 in recordable period information RT, and the time for releasing the movie in theaters is set at, for example, January of 2001, so that different priorities are assigned to distribution channels (regions) of the movie, thereby more effectively conducting advertising activities for the movie.

Additionally, fifthly, the contents of copy control information CCI and the contents of the viewable period information PT are combined and set, so that recording information can be handled while one-time copy and recording are permitted in a limited period. In this case, it is possible to set a high viewing charge or set high advertising expenses only during the set period. At this point, when copy and recording are performed on recoding information that is permitted to be duplicated and recorded only one time, the contents of the copy restriction information CCI are rewritten into the information indicating prohibition of subsequent copy and recording. In this case, the original copy restriction information CCI indicating permission of one-time copy and recording may be rewritten or the information indicating prohibition of subsequent copy and recording may be added.

Sixthly, as described in Embodiment 1, in the case of the read-only DVD 1, it is not necessary to set the viewable period information PT and the recordable period information RT of Embodiment 2. However, in order to make a distinction from distributed (broadcasted) recording information, indication may be provided that the recording information is recorded in the read-only DVD 1, by setting the contents of auxiliary information R corresponding to the viewable period information PT at, for example, "FFFFh" and setting the contents of the auxiliary information R corresponding to the viewable period information RT at, for example, "0000h". In this case, when disc region information is encrypted by setting a predetermined encryption key (or using the copy restriction information CCI), even in the case where the copy restriction information CCI is read out and tampered, it is possible to detect the tampering in advance and impose reproduction restriction or recording restriction.

Additionally, seventhly, in some contents of recording information, it is necessary to make a setting so that the recording information can be freely duplicated but cannot be reproduced or viewed in the other countries or regions. In this case, according to the present invention, by setting the reproducible region information PA, it is possible to limit a reproducible region while permitting free copy. Similarly, also in the case of a recording restriction in the recorder RC, by setting the recordable region information RAA, recording information can be also distributed as recording information that is freely distributed and recorded in a limited region.

Further, eighthly, since the copy restriction information CCI is set for each region, in combination with the contents of the recordable period information RT, settings can be made with different contents for each region. For example, setting can be made that copy is prohibited in a region for a predetermine period and copy is permitted after a lapse of the period.

Furthermore, ninthly, as to recording information prohibited from being duplicated, the viewable period information PT and the reproducible region information PA are set, so that recording information can be protected from being viewed in some regions. In this case, the setting is particularly effective when the broadcasting of recording information about adjacent different districts is delayed by six months, for example, on satellite broadcasting.

Additionally, tenthly, time shift reproduction is permitted or is not permitted depending on each region, so that charging for advertising campaign and viewing can be properly performed. Moreover, when recordable recording information is recorded in the DVD 100 or the like, it is possible to newly set a reproducible region or a reproducible period.

Besides, the programs corresponding to the flowcharts of FIGs. 6, 14, and 16 are recorded in a recording medium such as a flexible disc or a hard disc, or the programs distributed via a network such as the Internet are temporarily recorded, and the programs are read and executed by a microcomputer or the like, so that the microcomputer or the like may serve as the system control part 7 in the DVD player P, the CPU 25 in the set top box STB, and the system control part 7 in the recorder RC.

## Claims

1. An information generating apparatus(M) **characterized by**:
a control information adding device(60) for adding permission control information to recording information, the permission control information controlling at least one of recording and reproduction of the recording information for each of predetermined regions.

2. The information generating apparatus(M) according to claim 1, wherein:
the control information adding device(60) further adds copy restriction information to the recording information, the copy restriction information restricting copy of the recording information for each of the regions after the recording information is recorded.

3. The information generating apparatus(M) according to claim 2, wherein;
the permission control information and the copy restriction information include correlation information having a correlation for preventing tampering.

4. The information generating apparatus(M) according to any one of claims 1 to 3, wherein;
the permission control information further includes period information indicating a period for permitting at least one of recording or reproduction of the recording information.

5. An information reproducing apparatus(P) for reproducing the recording information outputted with addition of permission control information and copy restriction information, the permission control information controlling at least one of recording and reproduction of the recording information for each of predetermined regions, the copy restriction information restricting copy of the recording information after the recording information is recorded,
the recording information including unit copy restriction information for each unit of predetermined information,
the information reproducing apparatus(P) **characterized by**:
a first extracting device(10) for extracting the unit copy restriction information from the recording information,
a second extracting device(10) for extracting the copy restriction information from the recording information,
a detecting device(7) for detecting whether or not contents of the extracted unit copy restriction information and contents of the extracted copy restriction information coincide with each other, and
a reproduction control device(7) for prohibiting reproduction of the recording information when the contents of the extracted unit copy restriction information and the contents of the ' copy restriction information do not coincide with each other.

6. An information reproducing apparatus(P) for reproducing recording information outputted with addition of permission control information and copy restriction information, the permission control information controlling at least one of recording and reproduction of the recording information for each of predetermined regions and including correlation information having a correlation for preventing tampering, the copy restriction information including the correlation information and restricting copy of the recording information after the recording information is recorded, ,
the information reproducing apparatus(P) **characterized by**:
a first extracting device(10) for extracting the permission control information from the recording information,
a second extracting device(10) for extracting the copy restriction information from the recording information,
a detecting device(7) for detecting presence or absence of tampering based on the correlation information included in the extracted permission control information and the extracted copy restriction information, and
a reproduction control device(7) for prohibiting reproduction of the recording information when tampering is detected by the detecting device.

7. An information generating method **characterized by** a control information adding process of adding permission control information to recording information, the permission control information controlling at least one of recording or reproduction of the recording information for each of predetermined regions.

8. An information reproducing method for reproducing recording information outputted with addition of permission control information and copy restriction information, the permission control information controlling at least one of recording and reproduction of the recording information for each of predetermined regions, the copy restriction information restricting copy of the recording information after the recording information is recorded,
the recording information including unit copy restriction information for each unit of predetermined information,
the method **characterized by**:
a first extracting process of extracting the unit copy restriction information from the recording information,
a second extracting process of extracting the copy restriction information from the recording information,
a detecting process of detecting whether or not contents of the extracted unit copy restriction information and contents of the copy restriction information coincide with each other, and
a reproduction control process of prohibiting reproduction of the recording information when the contents of the extracted unit copy restriction information and the contents of the extracted copy restriction information do not coincide with each other.

9. An information reproducing method for reproducing recording information outputted with addition of permission control information and copy restriction information, the permission control ' information controlling at least one of recording and reproduction of the recording information for each of predetermined regions and including correlation information having a correlation for preventing tampering, the copy restriction information including the correlation information and restricting copy of the recording information after the recording information is recorded,
the method **characterized by**:
first extracting process of extracting the permission control information from the recording information,
second extracting process of extracting the copy restriction information from the recording information,
a detecting process of detecting presence or absence of tampering based on the correlation information included in the extracted permission control information and the extracted copy restriction information, and
a reproduction control process of prohibiting reproduction of the recording information when tampering is detected by the detecting process.

10. An information recording medium in which a program for an information generating is recorded so as to be readable by a computer included in an information generating apparatus, wherein the program allows the computer to function as a control information adding device for adding permission control information to recording information, the permission control information controlling at least one of recording or reproduction of recording information for each of predetermined regions.

11. An information recording medium in which a program for an information reproduction is recorded so as to be readable by a computer, wherein the program allows the computer to function as:
first extracting device for extracting unit copy restriction information from recording information,
second extracting device for extracting copy restriction information from the recording information,
a detecting device for detecting whether or not contents of the extracted unit copy restriction information and contents of the extracted copy restriction information coincide with each other, and
a reproduction control device for prohibiting reproduction of the recording information when the contents of the extracted unit copy restriction information and the contents of the copy restriction information do not coincide with each other,
the reproducing computer being included in an information reproducing apparatus for reproducing the recording information outputted with addition of the permission control information and the copy restriction information, the permission control information controlling, for each of predetermined regions, at least one of recording or reproduction of the recording information including unit copy restriction information for each unit of predetermined information constituting the recording information, the copy restriction information restricting copy of the recording information after the recording information is recorded.

12. An information recording medium in which a program for an information reproduction is recorded so as to be readable by a computer, wherein the program allows the computer to function as:
first extracting device for extracting permission control information from recording information,
second extracting device for extracting copy restriction information from the recording information,
a detecting device for detecting presence or absence of tampering based on correlation information included in the extracted permission control information and the extracted copy restriction information, and
a reproduction control device for prohibiting reproduction of the recording information when tampering is detected by the detecting device,
the reproducing computer being included in an information reproducing apparatus for reproducing the recording information outputted with addition of the permission control information and the copy restriction information, the permission control information controlling at least one of recording and reproduction of the recording information for each of predetermined regions and including correlation information having a correlation for preventing tampering, the copy restriction information including the correlation information and restricting copy of the recording information after the recording information is recorded.

13. A recording medium(1) for storing recording information and control information, the recording information serving as a target of at least one of recording and reproduction, the control information controlling one of the recording and reproduction using the recording information,
the recording medium **characterized by**:
a recording information recording region(UD) for recording the recording information with addition of the permission control information for controlling one of the recording and reproduction for each of predetermined regions, and
a control information recording region(TB) for recording the control information.

14. The recording medium(1) according to claim 13, wherein copy restriction information is further added to the recording information, the copy restriction information restricting copy for each of the regions after the recording information is recorded.

15. The recording medium(1) according to claim 14, wherein the permission control information and the copy restriction information include correlation information having a correlation for preventing tampering.

16. The recording medium(1) according to any one of claims 13 to 15, wherein the permission control information further includes period information for permitting at least one of recording and reproduction of the recording information.
